# EUROPÄISCHE PATENTSCHRIFT

(11) **EP 2 707 622 B1**
(45) Veröffentlichungstag und Bekanntmachung des Hinweises auf die Patenterteilung: **28.12.2016**
(21) Anmeldenummer: 12725649.3
(22) Anmeldetag: 11.05.2012
(51) Int. Cl.: F16D 51/20, B60T 13/08, F16D 65/56, B60T 7/20, F16D 129/04, F16D 121/16, F16D 127/02

(54) **RADBREMSE**
WHEEL BRAKE
FREIN DE ROUE

(30) Priorität: 13.05.2011 DE 202011050119 U; 20.07.2011 DE 202011050773 U
(43) Veröffentlichungstag der Anmeldung: 19.03.2014
(73) Patentinhaber: AL-KO Technology Austria GmbH, 6284 Ramsau im Zillertal (AT)
(72) Erfinder: ECKLE, Volker, 89183 Holzkirch (DE); RAMPP, Armin, 86513 Ursberg-Bayersried (DE); TILLMANN, Christian, 89312 Günzburg (DE)
(74) Vertreter: Ernicke, Klaus Stefan
(86) Internationale Anmeldenummer: PCT/EP2012/058756
(87) Internationale Veröffentlichungsnummer: WO 2012/156305

(56) Entgegenhaltungen:
- DE-U1-202006 004 697
- FR-A- 579 656
- GB-A- 612 360

## Beschreibung

Die Erfindung betrifft eine Radbremse mit den Merkmalen im Oberbegriff des Hauptanspruchs.

Eine solche Radbremse ist aus der DE 20 2006 004 697 U1 bekannt. Sie ist als Trommelbremse für auflaufgebremste Anhänger ausgebildet und weist eine Zuspanneinrichtung, Innen-Bremsbacken und eine der Zuspanneinrichtung gegenüberliegende Rückfahrautomatik auf, welche die Bremswirkung bei Rückwärtsfahrt mindert oder aufhebt. Ferner ist eine den Bremsverschleiß automatisch kompensierende Nachstelleinrichtung vorgesehen. Die Nachstelleinrichtung ist der Rückfahrautomatik zugeordnet und weist ein als Schubstange ausgebildetes und linear bewegliches Nachstellorgan auf, das mit einem Zahnrad an einem Gewindestößel der Rückfahrautomatik kämmt und diesen zur Nachstellung bei Bremsverschleiß dreht, wobei die Stützbreite der Bremsbacken an der Rückfahrautomatik vergrößert wird. Die Nachstelleinrichtung wird von einem Getriebe betätigt, das zwischen den Bremsbacken angeordnet ist und deren Bewegung beim Zuspannen der Radbremse abgreift. Bei einem vergrößerten Bremsbetätigungshub verändert die Löseeinrichtung die Abstützung einzelner Lenker des Getriebes und die innere Getriebekinematik, wodurch die Nachstelleinrichtung deaktiviert wird. Ein vergrößerter Bremsbetätigungshub kann durch Wärmedehnungen oder bei Rückwärtsfahrt auftreten.

Die DE 10 2008 018 655 A1 zeigt eine entsprechende Radbremse mit Rückfahrautomatik, Nachstelleinrichtung und Löseeinrichtung. Die Nachstelleinrichtung ist der Rückfahrautomatik zugeordnet und weist ebenfalls eine linear bewegliche, federbelastete Zug- oder Schubstange als Nachstellorgan auf, die von einem Nachstellgetriebe mit mehreren Lenkern betätigt wird, wobei die Lenker am Bremsschild und an den beiden Bremsbacken gelenkig gelagert sind. Bei Rückwärtsfahrt betätigt die Rückfahrautomatik einen Schwenkhebel, der seinerseits einen Schieber gelenkig antreibt, der mit einer Rampe unter die Zug- oder Schubstange greift und diese unter Lösen der Nachstelleinrichtung anhebt. Bei Vorwärtsfahrt wird der Schieber zurückgezogen, sodass der betreffende Lenker auf der Rampe wieder abwärts gleitet und die Nachstelleinrichtung in Eingriff kommt bzw. aktiviert wird.

Eine andere Radbremse mit Lösen einer Nachstelleinrichtung bei vergrößertem Spannhub ist aus der DE 20 2006 002 580 U1 bekannt. An der Zuspanneinrichtung ist eine den Bremsverschleiß automatisch kompensierende Nachstelleinrichtung angeordnet, die eine integrierte Löseeinrichtung aufweist, die bei vergrößertem Spannhub der Zuspanneinrichtung bei Wärmedehnungen oder Rückwärtsfahrt die Nachstelleinrichtung deaktiviert.

Eine weitere Innenbackenbremse mit automatischer Nachstelleinrichtung ist aus der EP 0 482 430 B1 bekannt. Um ein unerwünschtes Verstellen der Nachtelleinrichtung bei einem vergrößerten Bremsbetätigungshub zu vermeiden, ist die Nachstelleinrichtung mittels eines stabförmigen Verbindungsglieds mit einer ausweichfähig gelagerten Bremsbacke verbunden, wobei diese Verbindung bei der Rückwärtsfahrt und bei einem Ausweichen der Bremsbacke gelöst werden kann.

Die EP 0 261 660 A1 zeigt Radbremsen mit unterschiedlichen Konstruktionen einer Rückfahrautomatik. Die Rückfahrautomatik besitzt einen Einstellmechanismus zum manuellen Einstellen der Abstützbreite zwischen den Bremsbacken.

Es ist Aufgabe der vorliegenden Erfindung, eine verbesserte Nachstelltechnik für Radbremsen mit einer Rückfahrautomatik aufzuzeigen.

Die Erfindung löst diese Aufgabe mit den Merkmalen im Hauptanspruch.

Die beanspruchte Radbremse bietet eine sehr präzise und störungssichere Nachstellfunktion, die auch auf Betriebs- und Umgebungseinflüsse korrekt und exakt reagiert.

Die Kopplung, vorzugsweise direkte Kopplung, der abstützseitigen, vorzugsweise an der Rückfahrautomatik angeordneten, Nachstelleinrichtung mittels eines Übertragungselements mit der Betätigungseinrichtung der Radbremse, insbesondere einem Spreiz- oder Spannschloss, hat den Vorteil, dass die Nachstellfunktion besonders gut und zielsicher ist. Die Betätigungseinrichtung wirkt direkt auf das Übertragungselement und betätigt dieses. Dies ist genauer, präziser und schneller als der vorbekannte Abgriff von Bremsbackenbewegungen für die Betätigung der Nachstelleinrichtung.

Die Betätigungseinrichtung führt definierte, klar und eindeutig erfassbare Bewegungen aus, die für die Nachstellung benutzt werden können. Außerdem kann eine Übersetzung vorhanden sein, um den Nachstellweg zu vergrößern, um auch kleine Betätigungs- oder Spreizbewegungen zu Nachstellzwecken nutzen zu können.

Mit der beanspruchten Radbremse und deren Nachstelleinrichtung kann das Auftreten eines Bremsverschleißes und die Notwendigkeit einer Bremsnachstellung besonders gut und sicher detektiert werden. Hierbei können insbesondere Fehler verursachende Einflüsse, wie eine Rückwärtsfahrt oder eine Wärmedehnung der Radbremse und ihrer Teile, rasch und sicher erkannt und zu einer entsprechenden Deaktivierung der Nachstelleinrichtung benutzt werden.

Die beanspruchte Radbremse hat den Vorteil eines besonders guten und schnellen Ansprechverhaltens bei der Deaktivierung der Nachstelleinrichtung. Insbesondere wird eine Rückwärtsfahrt besonders schnell erkannt und führt zu einer sofortigen und hoch wirksamen Deaktivierung der Nachstellung.

Hierfür ist in einer Ausführungsform eine Aktivierungseinrichtung besonders günstig, die für die Abstützung eines Nachstellorgans, insbesondere eines schwenkbaren Nachstellhebels, an einem bei Rückwärtsfahrt sich unverzüglich bewegenden Ausweichorgan der Rückfahrautomatik sorgt. Diese Abstützung geht bei Rückwärtsfahrt verloren, wobei ein Deaktivierungsmittel, insbesondere Spannmittel, für eine sofortige Deaktivierung der Nachstelleinrichtung sorgt. Die Nachstelleinrichtung deaktiviert sich dadurch selbstständig und wird andererseits bei Wiederaufnahme eines normalen Fahrbetriebs von der Rückfahrautomatik wieder aktiviert und abgestützt. Durch die Anordnung der Nachstelleinrichtung der Rückautomatik können deren Funktionen unmittelbar als Indikator für eine Rückwärtsfahrt benutzt werden.

In einer anderen Ausführungsform ist eine Aktivierungseinrichtung besonders günstig, die bei Rückwärtsfahrt eine Bewegungsweiterleitung des Übertragungselements von der Betätigungseinrichtung zur Nachstelleinrichtung mindert oder unterbindet und damit eine unerwünschte Nachstellung verhindert. Das Übertragungselement und die Nachstelleinrichtung können miteinander dauerhaft verbunden bleiben, z.B. über ein Gelenk, und brauchen bei Rückwärtsfahrt nicht getrennt zu werden.

Günstig ist eine Ausbildung des Übertragungselements als Getriebe, insbesondere als Lenkergetriebe. Durch die Lagerabstützung des Getriebes an einer bei Rückwärtsfahrt ausweichenden Bremsbacke, vorzugsweise der dabei auflaufenden Bremsbacke, können deren Bewegungen unmittelbar als Indikator für eine Rückwärtsfahrt benutzt werden.

Die beanspruchte Radbremse kann auch über eine Thermoabschaltung verfügen. Diese kann getrennt von einer auf Rückwärtsfahrt ansprechenden Aktivierungseinrichtung funktionieren und kann eine entsprechende eigenständige konstruktive Ausbildung und Anordnung haben. Das Auftreten einer übermäßigen Bremserwärmung kann unabhängig von der Erwärmungsursache sowie rechtzeitig und sicher detektiert werden und kann zu einer Deaktivierung der Nachstelleinrichtung führen. Dies kann im normalen Vorwärtsfahrbetrieb und auch bei Rückfahrtsfahrt erfolgen. Die Thermoabschaltung ist in ihrer Funktion unabhängig von einer Betätigung der Radbremse. Die Deaktivierung kann stattfinden, bevor überhaupt die Radbremse betätigt wird.

Die beanspruchte Nachstelleinrichtung ist nicht mehr auf die Detektion eines übermäßigen Zuspannweges an der Betätigungseinrichtung angewiesen, sondern kann auf andere Weise und dabei schneller und zielsicherer eine Rückwärtsfahrt und eine übermäßige Wärmedehnung der Radbremse erfassen und frühzeitig die Nachstelleinrichtung deaktivieren. Fehlerhafte Nachstellungen werden dadurch mit besonders hoher Sicherheit vermieden. Zwischen einem Bremsenverschleiß und der Notwendigkeit einer Nachstellung einerseits und Fehlereinflüssen, insbesondere Rückwärtsfahrt und Wärmedehnung andererseits, kann mit hoher Sicherheit unterschieden werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 bis 5:: eine erste Varianten einer Radbremse mit einer Rückfahrautomatik, einer automatischen Nachstelleinrichtung, einer Aktivierungseinrichtung und einer Thermoabschaltung in verschiedenen Ansichten,
- Figur 6 bis 11:: eine zweite Variante der Radbremse von Figur 1 in verschiedenen Ansichten,
- Figur 12 bis 17:: eine dritte Variante der Radbremse von Figur 1 in verschiedenen Ansichten,
- Figur 18 bis 23:: eine vierte Variante der Radbremse von Figur 1 in verschiedenen Ansichten,
- Figur 24 bis 27:: eine fünfte Variante der Radbremse von Figur 1 in verschiedenen Ansichten,
- Figur 28 und 29:: einen Fahrzeuganhänger mit Radbremsen und einer Auflaufbremseinrichtung in Seitenansicht und Draufsicht,
- Figur 30 bis 33:: eine sechste Varianten einer Radbremse in verschiedenen Ansichten,
- Figur 34 bis 37:: eine siebte Variante der Radbremse in verschiedenen Ansichten und,
- Figur 38 bis 43:: verschiedene Varianten einer Thermoabschaltung.

Die Erfindung betrifft eine Radbremse (2) für Fahrzeugräder (1) und ein damit ausgerüstetes Fahrzeug (57) sowie ein Verfahren zum Betrieb einer solchen Radbremse (2).

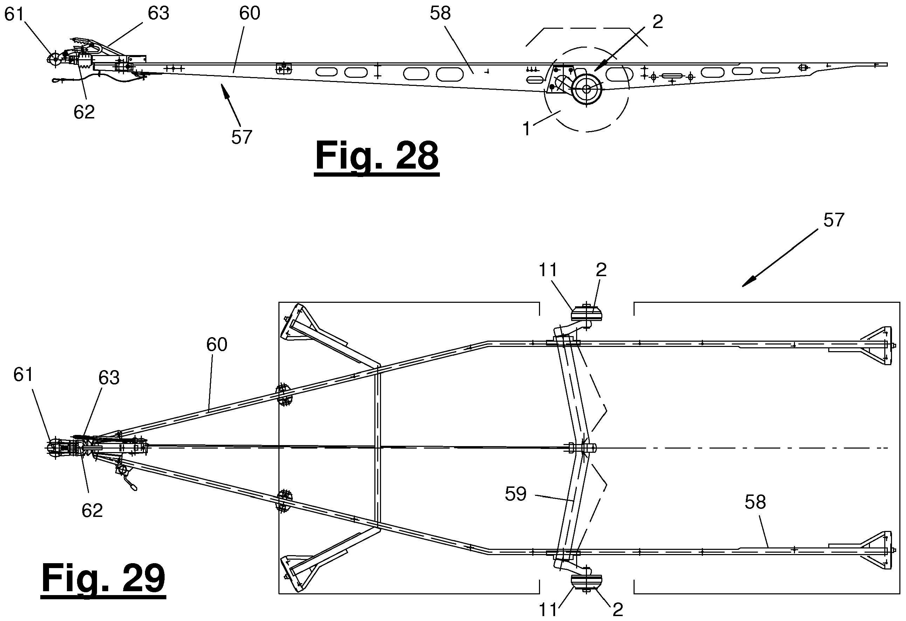

Bei dem Fahrzeug (57) handelt es sich z.B. um den in Figur 28 und 29 gezeigten Fahrzeuganhänger mit einem Fahrgestell (58), mit einer oder mit mehreren Achsen (59) und mit einer starren oder beweglichen Zugdeichsel (60), an der eine Anhängerkupplung (61) und eine

Auflaufbremseinrichtung (62) sowie eine ggf. mit einem Federspeicher ausgestatteten Feststell- oder Handbremseinrichtung (63) frontseitig angeordnet sind. Von den Bremseinrichtungen (62,63) werden die Bremskräfte mittels eines Bremsgestänges und/oder eines Seilzugs oder dgl. auf die Radbremsen (2) übertragen.

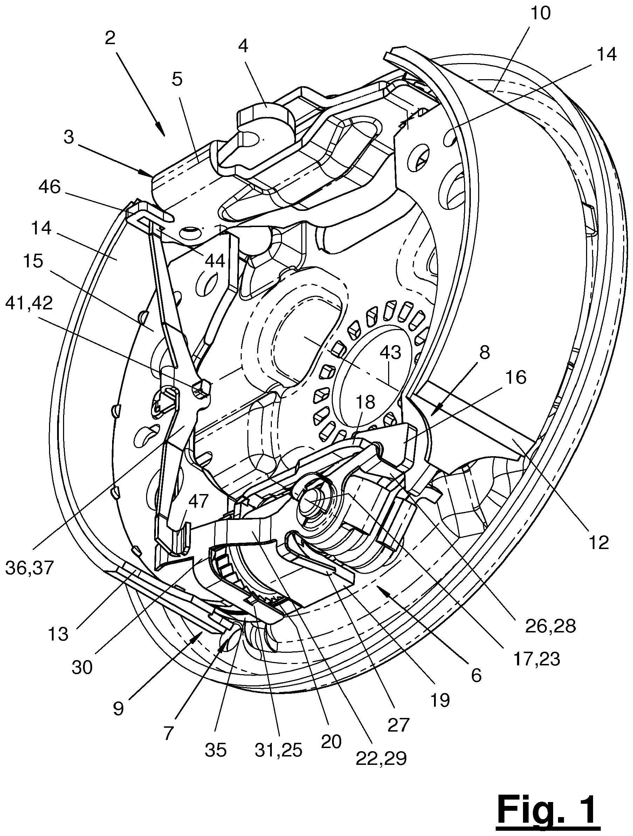

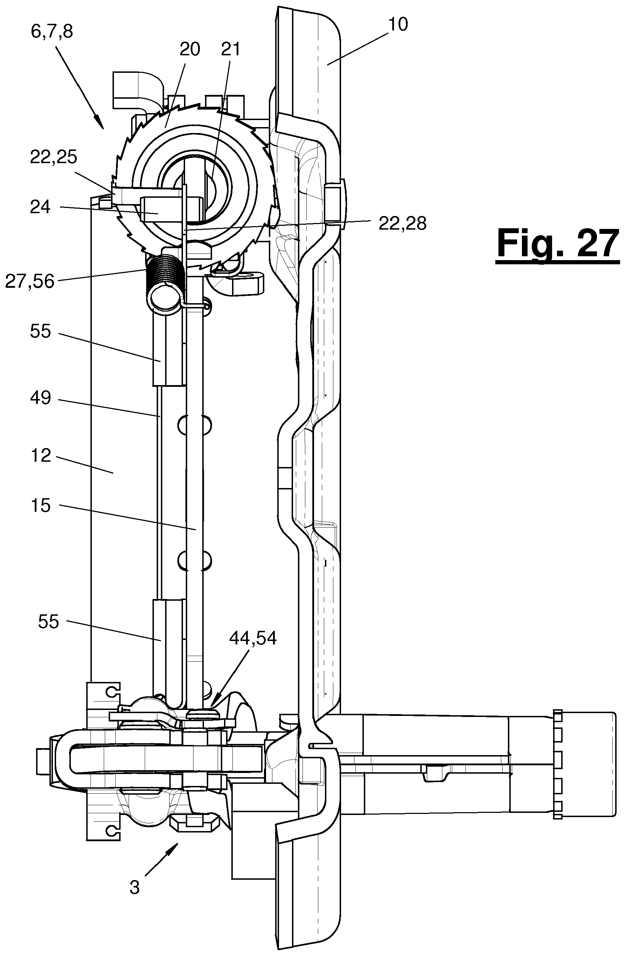

Figur 1 bis 5, 6 bis 11, 12 bis 17, 18 bis 23 und 24 bis 27 zeigen fünf Varianten einer solchen Radbremse (2) jeweils in perspektivischer Ansicht, Draufsicht, geklappten oder geschnittenen Seitenansichten und vergrößerten Detailansichten einer aktivierten und einer deaktivierten Stellung.

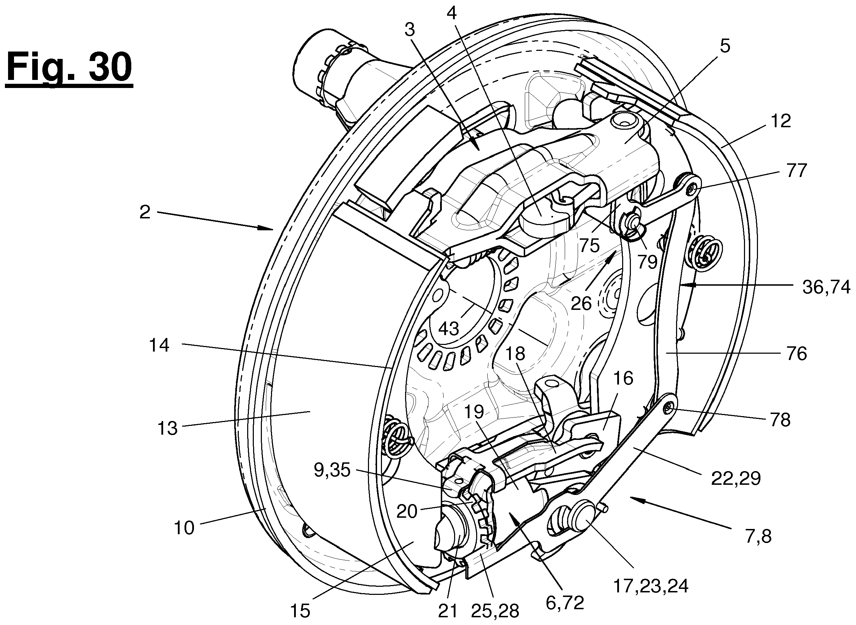

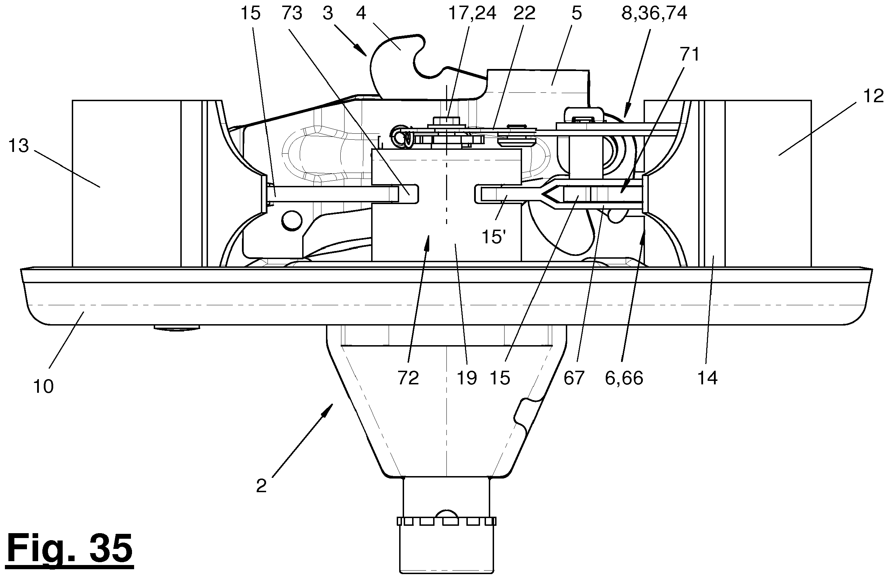

Figur 30 bis 33 und 34 bis 37 zeigen zwei weitere Varianten sechs und sieben einer solchen Radbremse (2) jeweils in perspektivischer Ansicht, geklappter Seitenansicht mit Blick auf die Abstützung und in Draufsichten von einer aktivierten und einer deaktivierten Betriebsstellung.

Die Radbremse (2) besitzt eine Rückfahrautomatik (6) und eine automatische Nachstelleinrichtung (7) zum Nachstellen der Bremswirkung im Fahrbetrieb. Die Nachstelleinrichtung (7) ermöglicht die Kompensation von Bremsenverschleiß, z.B. Verschleiß der Bremsbackenbeläge, der Bremstrommel etc.. Die Radbremsen (2) können dabei in ihrer Grundkonstruktion gleich oder ähnlich sein. Sie unterscheiden sich in der Ausbildung und Anordnung der nachfolgend erläuterten Nachstelleinrichtung (7).

Die Nachstelleinrichtung (7) ist über ein Übertragungselement (36) mit einer Betätigungseinrichtung (3) der Radbremse (2) verbunden. Für die Nachstelleinrichtung (7) ist eine Aktivierungseinrichtung (8) vorhanden, welche die Nachstelleinrichtung (7) bei Vorwärtsfahrt aktiviert und bei Rückwärtsfahrt deaktiviert. Ferner kann die Nachstelleinrichtung (7) eine Thermoabschaltung (9) aufweisen, welche die Nachstelleinrichtung (7) bei übermäßiger Erwärmung deaktiviert.

Die Radbremse (2) weist in den verschiedenen Ausführungsbeispielen ein Bremsorgan (11), z.B. eine in Figur 29 gezeigte Bremstrommel auf, an die ein oder mehrere Bremsbacken (12,13) angedrückt werden können. In den gezeigten Ausführungsbeispielen handelt es sich um eine Trommelbremse mit inneren Bremsbacken (12,13), die mittels einer schwimmend gelagerten Betätigungseinrichtung (3) unter Einwirkung eines Betätigungsorgans, z.B. eines Seilzugs, gegen die Rückstellkraft von Bremsfedern (nicht dargestellt) gespannt und gegen die Bremstrommel (11) gedrückt sowie auch wieder gelöst werden.

Die Bremsbacken (12,13) sind in der Radbremse (2) zwischen einem rückseitigen Bremsschild (10) und der Bremstrommel (11) angeordnet und werden durch Federn am Bremsschild (10) in führender Anlage gehalten. An der Bremstrommel (11) wird das Fahrzeugrad (1) in geeigneter Weise befestigt. Die Bremstrommel (11) ist um eine zentrische Achse (43) drehbar am Bremsschild (10) gelagert. Nachfolgend wird zunächst auf die Ausführungsbeispiele von Figur 1 bis 29 Bezug genommen.

Die Bremsbacken (12,13) bestehen aus einem Steg (15) und einem gebogenen Belagträger (14), auf dem ein Brems- oder Reibbelag angeordnet ist. Zwischen den Bremsbacken (12,13) und deren Stegen (15) ist am einen Ende die schwimmend gelagerte Betätigungseinrichtung (3) und am anderen Ende eine Rückfahrautomatik (6) angeordnet, welche bei Vorwärtsfahrt eine ortsfeste oder bremsschildfeste Abstützung bietet, welche die Backenenden miteinander verbindet und im normalen Bremsbetrieb ortsfest abstützt.

Die Betätigungseinrichtung (3), die auch als Zuspanneinrichtung oder Spreizeinrichtung bezeichnet wird, kann in beliebig geeigneter Weise ausgebildet sein und ist z.B. als ein Spannschloss gestaltet, welches von einem Betätigungsorgan, z.B. einem Bremsseil bzw. einem Bowdenzug, betätigt wird. Die Betätigungseinrichtung (3) besitzt ein die Bremsbacken (12,13) distanzierendes Spreizorgan (4), welches z.B. als schwenkbarer Spannhebel ausgebildet ist, der mittels einer Schwenkachse an einem gabelförmigen Gestell oder Gehäuse (5) drehbar gelagert und mit dem Betätigungsorgan verbunden ist. Der Spannhebel (4) hat an einem Hebelende eine Backenaufnahme, die als Ausnehmung oder als Gabel gestaltet ist und die formschlüssig mit dem Steg (15) der benachbarten Bremsbacke (13) in Eingriff steht. Am Gehäuse (5) ist gegenüberliegend eine zweite Backenaufnahme zum Eingriff mit der anderen Bremsbacke (12) angeordnet.

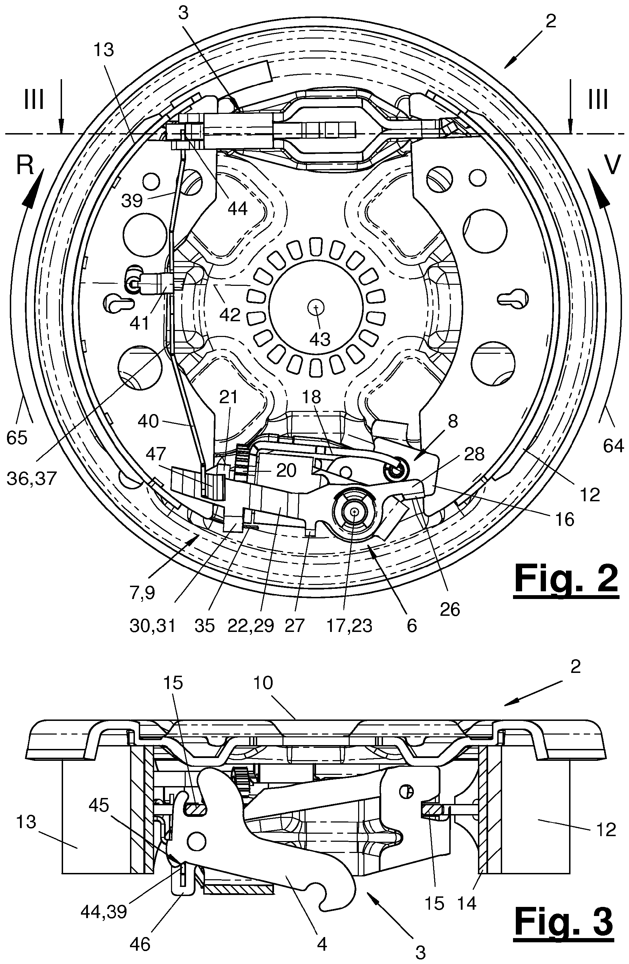

Die Radbremse (2) ist mit der erwähnten Rückfahrautomatik (6) versehen, welche bei Rückwärtsfahrt des Rads (1) die Bremswirkung mindert oder aufhebt, wobei zumindest eine Bremsbacke (12,13) außer Eingriff mit der Bremstrommel (11) gebracht wird. Die Rückfahrautomatik (6) ist der Betätigungseinrichtung (3) diametral gegenüberliegend an der anderen Seite der Radbremse (2) angeordnet und kann in verschiedener Weise ausgebildet und angeordnet sein. In den gezeigten Ausführungsformen ist sie entsprechend der EP 0 261 660 A1 ausgebildet und mit ihren Teilen beispielhaft in Figur 1 und 3 dargestellt. Figur 1 zeigt dabei perspektivische Ansicht der Rückfahrautomatik (6). Figur 2 zeigt die zugehörige Frontansicht. In den anderen vier Varianten kann die Rückfahrautomatik (6) in gleicher Weise ausgebildet sein.

Die Rückfahrautomatik (6) besteht aus einem bei Rückwärtsfahrt nachgebenden beweglichen Ausweichorgan (16), welches mit der bei Rückwärtsfahrt auflaufenden Bremsbacke (12) oder sog. Primärbacke, in Eingriff steht und eine gegenseitige Annäherung der Bremsbacken ermöglicht. Das Ausweichorgan (16) ist z.B. als Schwenkhebel ausgebildet, der über eine relativ ortsfeste bzw. bremsschildfeste Schwenkachse (17) unter Einwirkung einer nicht dargestellten Feder drehen kann und z.B. mittels einer frei drehbaren Führungsrolle am Rand des Stegs (15) der bei Rückwärtsfahrt auflaufenden Bremsbacke (12) anliegt. Der Schwenkhebel (16) wirkt mit einem Gewindestößel (21) nebst einer umgebenden Gewindehülse zusammen, die in einem relativ ortsfesten bzw. schildfesten Gestell oder Gehäuse (19) axial verschieblich gelagert sind und am anderen Ende mit der zweiten und bei Rückwärtsfahrt ablaufenden Bremsbacke (13) in Eingriff stehen. Die Längsachse des Gewindestößels (21) verläuft zwischen der Schwenkachse (17) und der Führungsrolle.

In Figur 2 und in anderen Figuren sind die Drehrichtung des Fahrzeugrads (1) bzw. der Radbremse (2) in Vorwärtsfahrt als Pfeil (64) und in Rückwärtsfahrt als Pfeil (65) dargestellt. Die Rückwärtsdrehrichtung ist außerdem durch ein "R" gekennzeichnet. Beim Bremsen in Vorwärtsfahrt drückt die dann auflaufende Bremsbacke (13) über den Gewindestößel (21) auf das Ausweichorgan (16) und drückt dieses zur anderen ablaufenden Bremsbacke (12) hin sowie gegen einen ortsfesten Anschlag. Die bei Vorwärtsfahrt auflaufende Bremsbacke (13) entwickelt eine höhere Presskraft als die ablaufende Bremsbacke (12), so dass letztere sich über das Ausweichorgan (16) ortsfest abstützen und ebenfalls Bremswirkung entfalten kann. In der dargestellten Ausführungsform wirkt die Radbremse (2) bei Vorwärtsfahrt als Simplex-Bremse mit ortsfester Abstützung beider Bremsbacken (12,13). Sie kann alternativ hierzu als Servo-Bremse ausgeführt sein, wenn der ortsfeste Anschlag des Ausweichorgans (16) entfällt und das Ausweichorgan (16) die Bremskräfte der bei Vorwärtsfahrt auflaufenden Bremsbacke (13) durch eine kleine Bewegung auf die ablaufende Bremsbacke (12) überträgt.

Bei Rückwärtsfahrt betätigt die Auflaufbremseinrichtung (62) die Radbremse (2), wobei der Auflaufweg und damit auch der Zuspannweg an der Zuspanneinrichtung (3) begrenzt ist. Bei der Rückwärts-Drehrichtung (65) wird die Bremsbacke (12) zur auflaufenden Backe und drückt gegen das Ausweichorgan (16), welches nachgibt und eine einwärts gerichtete Schwenkbewegung um seine gestellfeste Achse (17) ausführt. Dadurch verliert die auflaufende Backe (12) ihre Abstützung und kann keine signifikante Bremswirkung entfalten. Die Betätigungseinrichtung (3) folgt durch ihre schwimmende Lagerung dieser Ausweichbewegung der auflaufenden Bremsbacke (12), wodurch auch die bei Rückwärtsfahrt ablaufende Bremsbacke (13) zum Bremsen keine hinreichende Abstützung findet und ebenfalls keine signifikante Bremswirkung entfaltet. Bei Rückwärtsfahrt wird somit die Bremswirkung der Backen (12,13) aufgehoben oder zumindest wesentlich vermindert.

Erst wenn die Betätigungseinrichtung (3) durch die Feststellbremseinrichtung (63), z.B. den Handbremshebel oder den Federspeicher, noch weiter gespannt wird, findet eine Bremswirkung statt. Das schwenkende Ausweichorgan (16) drückt bei Rückwärtsfahrt über eine interne Nocke (nicht dargestellt) auf den verschieblichen Gewindestößel (21) und auf die ablaufende Bremsbacke (13) und schiebt diese in Rückwärtsdrehrichtung (65). Gegen Ende des weiteren Zuspannwegs kommt das Ausweichorgan (16) außerdem mit dem Stützglied (18) in Eingriffsstellung und schiebt dann dieses und den angebundenen Gewindestößel (21) weiter in Rückwärtsdrehrichtung (65). Hierbei werden beide Bremsbacken (12,13) mitgenommen, bis die ablaufende Bremsbacke (13) gegen einen nahe der Zuspanneinrichtung (3) relativ ortsfest angeordneten Festanschlag anläuft und hier eine Abstützung findet. Die Radbremse (2) kann dann dank der Abstützung gespannt werden und Bremswirkung entfalten, wobei sie als Servo-Bremse wirkt.

In Abwandlung des gezeigten und beschriebenen Ausführungsbeispiels kann die Rückfahrautomatik (6) in anderer Weise ausgebildet sein und ein anderes Ausweichorgan (16) aufweisen. Dies kann z.B. eine Ausbildung entsprechend der anderen Ausführungsformen in der EP 0 261 660 A1 sein.

Die Radbremse (2) besitzt ferner eine automatische Nachstelleinrichtung (7) zum Nachstellen der Bremswirkung im Fahrbetrieb. Hierüber kann auch die Grundeinstellung der Radbremse (2) vorgenommen werden. Die Nachstelleinrichtung (7) ermöglicht die Kompensation von Bremsenverschleiß, z.B. Verschleiß der Bremsbackenbeläge, der Bremstrommel etc.. Die Nachstelleinrichtung (7) ist an der Rückfahrautomatik (6) angeordnet und dient dazu, die Abstützbreite zwischen den Bremsbacken (12,13) im normalen Bremsbetrieb, d.h. den Abstand zwischen den Backen-Eingriffsstellen am Gewindestößel (21) und am Ausweichorgan (16) zu vergrößern. Mit zunehmendem Verschleiß wird der zum Anlegen der Bremsbacken (12,13) an der Bremstrommel (11) erforderliche Zuspannweg oder Spreizweg größer. Mit der Nachstelleinrichtung (7) wird diese Wegvergrößerung kompensiert.

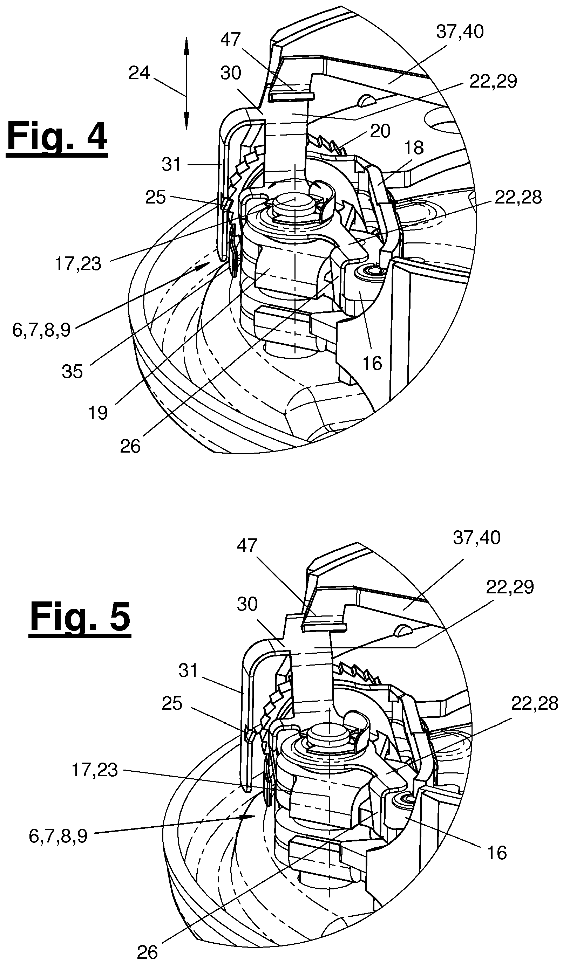

Die Nachstelleinrichtung (7) weist in den verschiedenen Varianten jeweils ein Stellteil (20) und ein mit dem Stellteil (20) in lösbaren Eingriff bringbares Nachstellorgan (22) auf. Das Stellteil (20) ist beispielsweise als Zahnrad ausgebildet und auf dem Gewindestößel (21) der Rückfahrautomatik (6) drehfest angeordnet. Die Zähne des Zahnrads (20) haben z.B. die in Figur 4 und 5 dargestellte Sägezahnform mit unterschiedlich steilen Zahnflanken. Das Nachstellorgan (22) ist in den verschiedenen Varianten jeweils als schwenkbarer Nachstellhebel ausgebildet, der zumindest um eine Schwenkachse (23) schwenkbar gelagert ist und der ein Nachstellelement (25) aufweist, welches mit dem Zahnrad (20) in Eingriff treten kann. Bei Auftreten von Belagverschleiß der Radbremse (2) dreht das Nachstellorgan (22) das Stellteil (20) um einen Zahn, wodurch der mitgenommene Gewindestößel (21) entsprechend linear und zur anliegenden Bremsbacke (13) hinbewegt wird. Dies vergrößert in der vorerwähnten Weise die Stützbreite der Bremsbacken (12,13).

Die Nachstelleinrichtung (7) weist ein mit der Betätigungseinrichtung (3) verbundenes Übertragungselement (36) auf und wird von der Betätigungseinrichtung (3) angetrieben und bewegt. Außerdem weist die Nachstelleinrichtung (7) eine Aktivierungseinrichtung (8) auf, welche die Nachstelleinrichtung (7) bei Vorwärtsfahrt aktiviert und bei Rückwärtsfahrt deaktiviert. Ferner kann die Nachstelleinrichtung (7) eine Thermoabschaltung (9) aufweisen, welche die Nachstelleinrichtung (7) bei übermäßiger Erwärmung deaktiviert. Die Aktivierungseinrichtung (8) und die Thermoabschaltung (9) sind als getrennte Einheiten ausgebildet und angeordnet, die unabhängig voneinander funktionieren können und die dabei auch unterschiedlich auf die Nachstelleinrichtung (7) einwirken können. Die Aktivierungseinrichtung (8) weist dabei ein Aktivierungsmittel (26) auf, welches die Nachstelleinrichtung (7) bei Vorwärtfahrt aktiviert und ein Deaktivierungsmittel (27), welches die Nachstellsteinrichtung (7) bei Rückwärtsfahrt deaktiviert.

In den nachfolgend beschriebenen Ausführungsvarianten sind unterschiedliche Ausführungsformen der Nachstelleinrichtung (7), der Aktivierungseinrichtung (8), der Thermoabschaltung (9) und des Übertragungselements (36) angegeben.

In der Ausführungsform von Figur 1 bis 5 ist der Nachstellhebel (22) schwenkbar am Gehäuse (19) der Rückfahrautomatik (6) gelagert. Seine Schwenkachse (23) kann hierbei parallelachsig oder gleichachsig zu der Schwenkachse (17) des Ausweichorgans (16) angeordnet sein.

Der Nachstellhebel (22) ist in den gezeigten Varianten eins bis drei von Figur 1 bis 17 mehrachsig beweglich und weist eine Zustellachse (23) sowie eine Nachstellachse (24) auf, mit denen das Nachstellelement (25) an das Stellteil (20) zugestellt werden kann und eine Nachstellbewegung ausführen kann. In der gezeigten ersten Variante von Figur 1 bis 5 ist die Zustellachse die besagte Schwenkachse (23) und die Nachstellachse (24) eine federelastische Ausbildung des Nachstellhebels (22), wobei entlang der linearen Nachstellachse (24) eine im wesentlichen tangentiale Nachstellbewegung ausgeführt wird.

Der Nachstellhebel (23) weist einen vorderen und einen hinteren Hebelarm (28,29) auf, die sich von der Schwenkachse (23) aus nach verschiedenen Richtungen erstrecken. Der vordere Hebelarm (28) ist zu der in Rückwärtsfahrt auflaufenden Bremsbacke (12) gerichtet. Der hintere Hebelarm (29) ist zu der anderen Bremsbacke (13) gerichtet und weist mehrere abstehende Ansätze auf. Der Nachstellhebel (23) ist als mehrfach abgewinkelter Blechstreifen ausgebildet und liegt flach auf oder über der vom Bremsschild (10) abgewandten Oberseite des Gehäuses (19) der Rückfahrautomatik (6).

Die Aktivierungseinrichtung (8) stützt die Nachstelleinrichtung (7), insbesondere deren Nachstellorgan (22), am Ausweichorgan (16) der Rückfahrautomatik (6) mit einer Spannkraft ab. Das Aktivierungsmittel (26) ist hierbei als ein mit dem Ausweichorgan (16) gekoppeltes Stützmittel ausgebildet. Dies ist z.B. ein nach unten gerichteter Absatz am Ende des vorderen Hebelarms (28), der an einer Flanke des Ausweichorgans (16) anliegt. Das Deaktivierungsmittel (27) ist als Spannmittel, insbesondere als Feder, ausgebildet und am Nachstellhebel (22) angeordnet, wobei es sich an einem relativ ortsfesten Teil der Radbremse (2), z.B. am Gehäuse (19) der Rückfahrautomatik (6) abstützt. In der gezeigten Ausführungsform befindet sich das Spannmittel (27) am hinteren Hebelarm (29) und ist als seitlicher und nach unten abgewinkelter Hebelansatz zur Bildung einer Blattfeder ausgestaltet. Das Deaktivierungs- oder Spannmittel (27) wirkt dem Aktivierungsmittel (26) entgegen und drückt den schwenkbaren Nachstellhebel (22) mit dem Stützarm (26) gegen das Ausweichorgan (16), das im normalen Fahrbetrieb und beim Bremsen in Vorwärtsfahrt eine stabile Lage einnimmt. Die Nachstelleinrichtung (7) stützt sich dadurch an der Rückfahrautomatik (6) um die Zustellachse (23) ab, wobei das Nachstellelement (25) in Eingriff mit dem Stellteil (20) gebracht wird.

In der ersten Variante von Figur 1 bis 5 ist ein weiterer seitlicher Ansatz (30) am hinteren Hebelarm (29) als nach unten zum Bremsschild (10) abgewinkelter Stellarm (31) ausgebildet, an dem das Nachstellelement (25) angeordnet und z.B. als ausgebogene Stellnase ausgebildet ist. Figur 1, 2 und 4 zeigen diese Eingriffstellung für den normalen Fahr- und Bremsbetrieb, in der die Nachstelleinrichtung (7) etwaigen Bremsverschleiß kompensieren kann.

Bei Rückwärtsfahrt weicht die Rückfahrautomatik (6) aus, wobei das Ausweichorgan (16) eine Drehbewegung gegen den Uhrzeigersinn ausführt. Hierdurch verliert die Nachstelleinrichtung (7) und deren Nachstellhebel (22) die Abstützung und dreht unter Einwirkung des Deaktivierungs- oder Spannmittels (27) ebenfalls gegen den Uhrzeigersinn, wodurch das Nachstellelement (25) vom Stellteil (20) und dem Eingriff gelöst wird. Es nimmt dann die in Figur 5 gezeigte Deaktivierungsstellung ein. Wenn anschließend das Fahrzeug (57) wieder vorwärts bewegt wird, kehrt die Rückfahrautomatik (6) in ihre Ausgangsstellung zurück, wobei das zurückschwenkende Ausweichorgan (16) das Nachstellorgan (22) über den Stützarm (26) unter Spannung der Blattfeder (27) mitnimmt, wobei die Nachstelleinrichtung (7) erneut zugestellt und aktiviert wird.

Das Übertragungselement (36) ist in der ersten Variante von Figur 1 bis 5 als Übertragungshebel (37), insbesondere als Schwenkhebel, ausgebildet und verbindet die Spreizeinrichtung (3) mit der Nachstelleinrichtung (7). Der Übertragungshebel (37) weist ein etwa im mittleren Hebelbereich angeordnetes Schwenklager (41) auf, das am Bremsschild (10) oder am Steg (15) der in Rückwärtsfahrt ablaufenden Bremsbacke (13) angeordnet ist und das eine Schwenkachse (42) aufweist, die quer zur Raddrehachse oder Trommelachse (43) bzw. parallel zur Hauptebene des Bremsschilds (10) ausgerichtet ist. Der Übertragungshebel (37) ist am Ende seines vorderen Hebelarms (39) über ein Antriebsmittel (44) mit der Betätigungseinrichtung (3) verbunden und am gegenüberliegenden Ende seines hinteren Hebelarms (40) über Abtriebsmittel (47) mit der Nachstelleinrichtung (7), insbesondere dem Nachstellorgan (22) verbunden. Das Antriebsmittel und das Abtriebsmittel (44,47) weisen in der Ausführungsform von Figur 1 bis 5 einen Mitnehmer auf, wobei für das Antriebsmittel (44) auch eine Übersetzung (45) vorhanden sein kann. Figur 3 verdeutlicht diese Anordnung in einem Schnitt gemäß Schnittlinie III-III von Figur 2. Der Übertragungshebel (36) steht mit dem Spreizorgan (4), hier einem schwenkbaren Spreizhebel, in Verbindung. Das vordere Ende des Hebelarms (39) liegt dabei an der Seitenwand des Spreizhebels (4) an, der in diesem Bereich eine Kulisse mit einer schräg und tangential zur Drehachse ausgerichteten Wandung aufweist. Die Kontaktstelle liegt an der vom Bremsschild (10) abgewandten Spreizhebelseite. Die Kulisse bildet die besagte Übersetzung (45) zwischen der Drehbewegung des Spreizhebels (4) und der entsprechenden aufwärts gerichteten Drehbewegung des Übertragungshebels (37). Der Zuspann- oder Spreizweg wird in einen vergrößerten Nachstellweg entlang der Nachstellachse (24) an der Nachstelleinrichtung (7) übersetzt. Zur Sicherung des Mitnehmereingriffs kann eine Führung (46) für den vorderen Hebelarm (39) vorhanden sein, die z.B. von einem am Gestell (5) der Spreizeinrichtung (3) angeordneten Auge gebildet wird.

Der gemäß Figur 2 in der Draufsicht ggf. abgewinkelte Übertragungshebel (37) weist am anderen Ende des Hebelarms (40) ein Abtriebsmittel (47) auf, das z.B. als seitlich abgewinkelter Hebelansatz ausgebildet ist und das von oben auf das freie Ende des hinteren Hebelarms (29) des Nachstellhebels (22) drückt. Bei Bremsbetätigung drückt dieser Hebelansatz (47) den federelastischen und ggf. mehrfach abgewinkelten hinteren Hebelarm (29) und den Stellarm (31) nach unten. Wenn bei Bremsverschleiß der Zuspann- oder Spreizweg sich über ein vorgegebenes Maß erhöht, vergrößert sich der Nachstellweg entlang der Nachstellachse (24), wobei das Nachstellelement (25) hinter einen Zahn des Stellteils (20) springt und bei der Rückwärtsbewegung bei Bremsentlastung das Stellteil (20) mitnimmt und dreht.

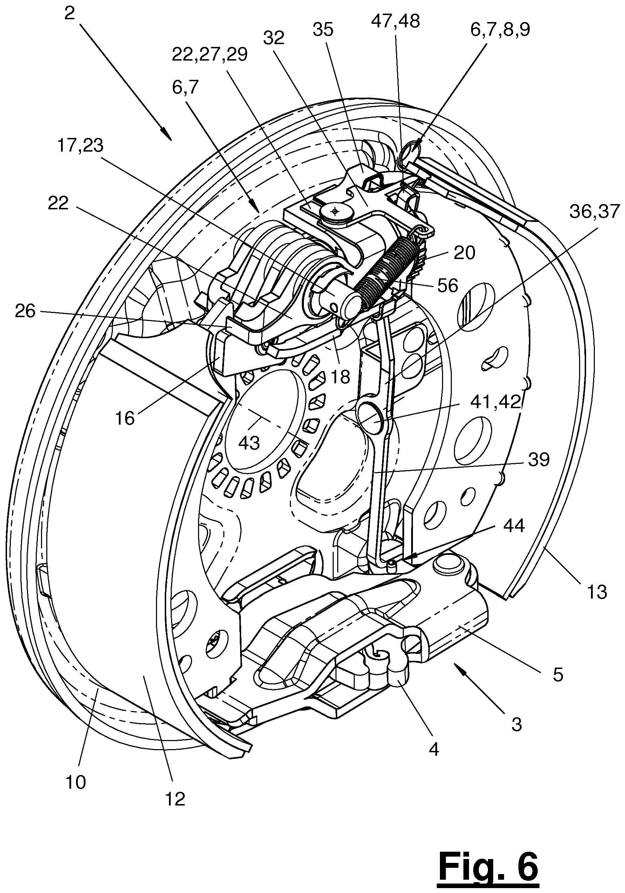

Die zweite Variante von Figur 6 bis 11 unterscheidet sich in mehrfacher Hinsicht von der vorbeschriebenen ersten Variante. Der Nachstellhebel (22) ist hier mehrteilig ausgebildet und trägt zusätzlich einen Schwenkhebel (32). Dieser ist am hinteren Hebelarm (29) schwenkbar gelagert, welcher eine nach unten zum Bremsschild (10) abgewinkelte Form aufweist und am unteren Ende wieder das Deaktivierungselement (27) bzw. die Blattfeder mit Gehäuseabstützung ausbildet. Die Schwenkachse des Schwenkhebels (32) bildet die Nachstellachse (24) und ist quer zur Achse des Gewindestößels (21) und des Stellteils (20) ausgerichtet. Der Schwenkhebel (32) übernimmt die Funktion des im wesentlichen starren Stellarms (31) der ersten Variante. Der Schwenkhebel (32) wird dabei von einer rückstellenden Feder (56) beaufschlagt.

Der Schwenkhebel (32) weist einen zum Stellteil (20) gerichteten Hebelteil (33) auf, der das Nachstellelement (25), insbesondere eine Stellnase, trägt. Ein weiterer quer und aufrecht dazu angeordneter Hebelteil (34) ist am freien Ende mit der Feder (56) verbunden, die am anderen Ende am gemeinsamen Achsbolzen von Schwenk- und Zustellachse (17,23) eingehängt ist. Die Nachstellachse (24) ist in diesem Fall eine Drehachse, wobei der Schwenkhebel (32) zum Nachstellen in einer quer zum Bremsschild (10) gerichteten Tangentialebene zum Stellteil (20) Schwenkbewegungen ausführt. Die rückstellende Feder (56) ist schwächer als das Spannmittel (27) bzw. die Blattfeder.

Das Übertragungselement (36) ist bei der zweiten Variante wieder als Übertragungshebel (37) ausgebildet. Das Antriebsmittel (44) am vorderen Ende des Hebelarms (39) ist wieder als Mitnehmer ausgebildet, wobei in diesem Fall eine Übersetzung (45) entfallen kann. Der Hebelarm (39) hat in der zweiten Variante ein abgewinkeltes Ende, welches unter einen seitlich vorspringenden Mitnehmerzapfen am Spreizhebel (4) greift und bei dessen Drehbewegung für ein Niederdrücken und eine Drehung des Übertragungshebels (37) sorgt. Die Drehrichtung ist in diesem Fall gegenläufig zur ersten Variante.

Das Abtriebsmittel (47) wird von einem Drehbügel (48) gebildet, der um die Achse des Gewindestößels (21) und des Stellteils (20) drehbar gelagert ist und der an der Rückseite mit dem hinteren Ende des Übertragungshebels (37) und dessen Hebelarms (40) im Eingriff steht. Der Drehbügel (48) umgibt das Stellteil (20), wobei sein vorderes Ende über das Hebelteil (33) und das Nachstellelement (25) greift und auf diese einwirkt. Bei Bremsbetätigung führt der Übertragungshebel (37) gemäß Figur 6 eine Drehbewegung im Uhrzeigersinn aus, wobei er mit dem hinteren Hebelarm (40) den Drehbügel (48) anhebt, der durch die induzierte Drehbewegung seinerseits das Hebelteil (33) und das Nachstellelement (25) abwärts dreht.

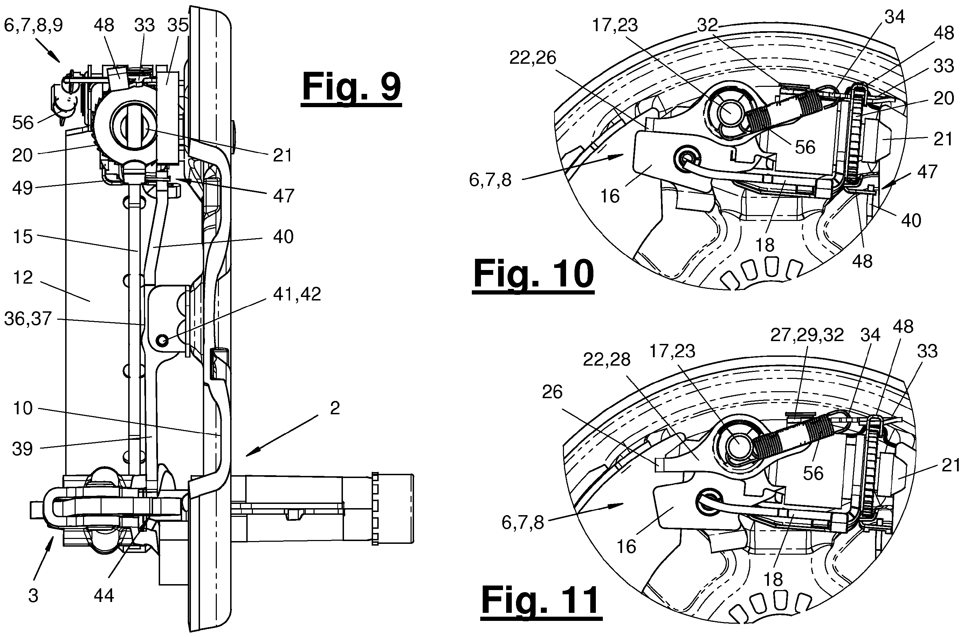

Die Aktivierungs- und Deaktivierungsfunktion ist ähnlich wie bei der ersten Variante. Figur 10 zeigt in der Draufsicht die Aktivierungsstellung mit Abstützung der Nachstelleinrichtung (7) am Ausweichorgan (16). In Figur 11 ist die Deaktivierungsstellung dargestellt, in der das Spannmittel (27) bei weggeschwenktem Ausweichorgan (16) in einer Folgebewegung den Nachstellhebel (22) mitsamt dem Schwenkhebel (32) gegen den Uhrzeigersinn dreht und dabei dessen Hebelteil (33) vom Stellteil (20) löst und entfernt. Die Überdeckung mit dem Drehbügel (48) bleibt noch bestehen.

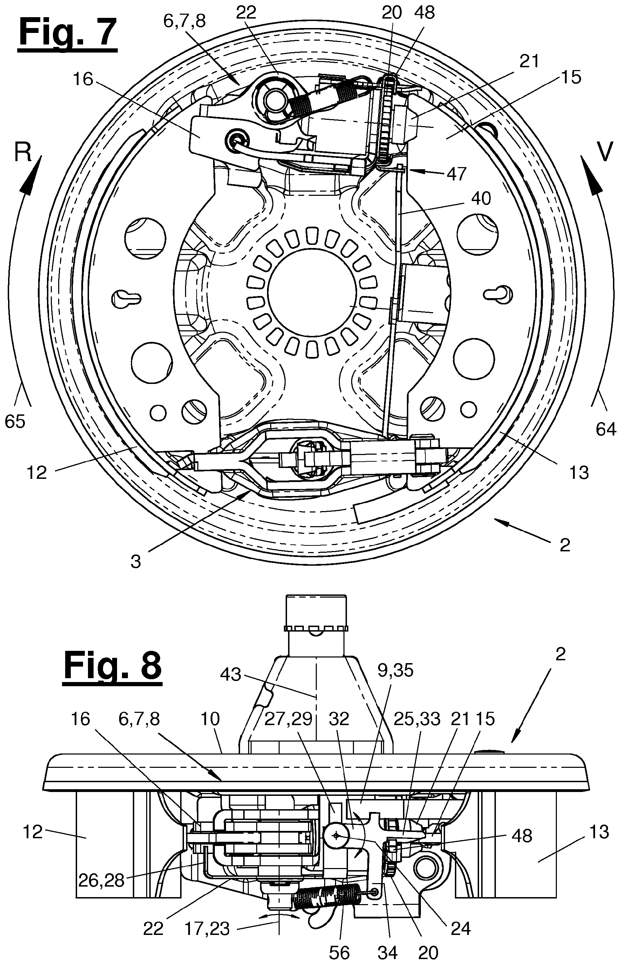

Figur 8 zeigt diese gegenseitige Zuordnung in einer geklappten Seitenansicht zu der in Figur 7 dargestellten Draufsicht. In Figur 9 ist eine nach links geklappte Seitenansicht zu der Draufsicht von Figur 7 dargestellt. Hieraus ist ersichtlich, dass bei der zweiten Variante das Schwenklager (41) des Übertragungshebels (37) am Bremsschild (10) angeordnet ist.

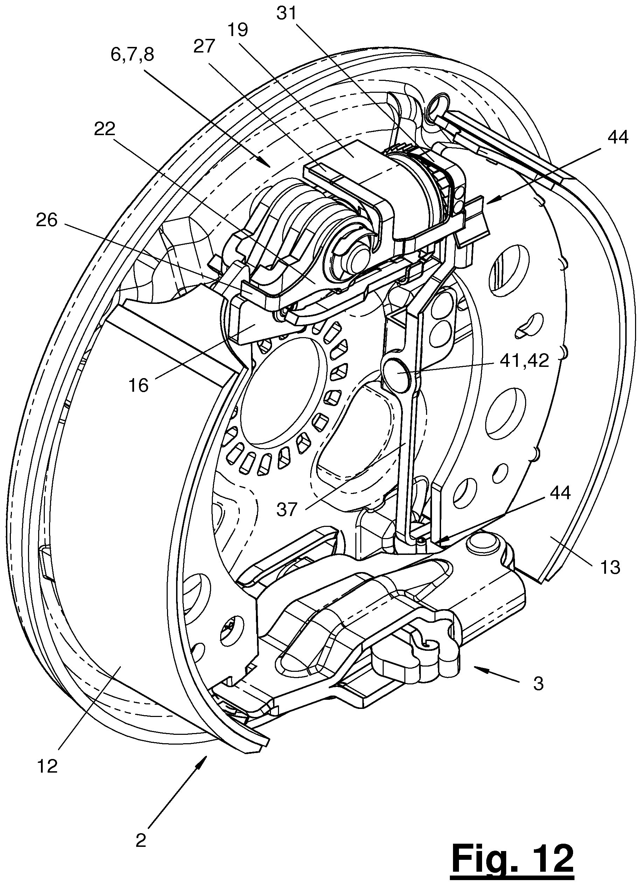

Bei der dritten Variante von Figur 12 bis 17 hat der Nachstellhebel (22) wieder eine ähnliche Form wie in der ersten Variante mit der rotatorischen Zustellachse (23) und der linearen Nachstellachse (24) sowie dem Stellarm (31). Auch das Aktivierungs- und Deaktivierungsmittel (26,27) ist wie in der ersten Variante ausgebildet.

Ein Unterschied besteht im Abtriebsmittel (47) des Übertragungselements (36). Bei der dritten Variante kommt ein Übertragungshebel (37) zum Einsatz, der wie bei der zweiten Variante ein schildfestes Lager (41) und ein Antriebsmittel (44) mit Mitnehmern aufweist. Das Abtriebsmittel (47) wird von einer Mitnehmeranordnung gebildet, wobei das hintere Ende des Hebelarms (40) unter den hinteren Hebelarm (29) des Nachstellhebels (22) greift und diesen bei einer Bremsenbetätigung anhebt sowie das Nachstellelement (25) vom Stellteil (20) löst.

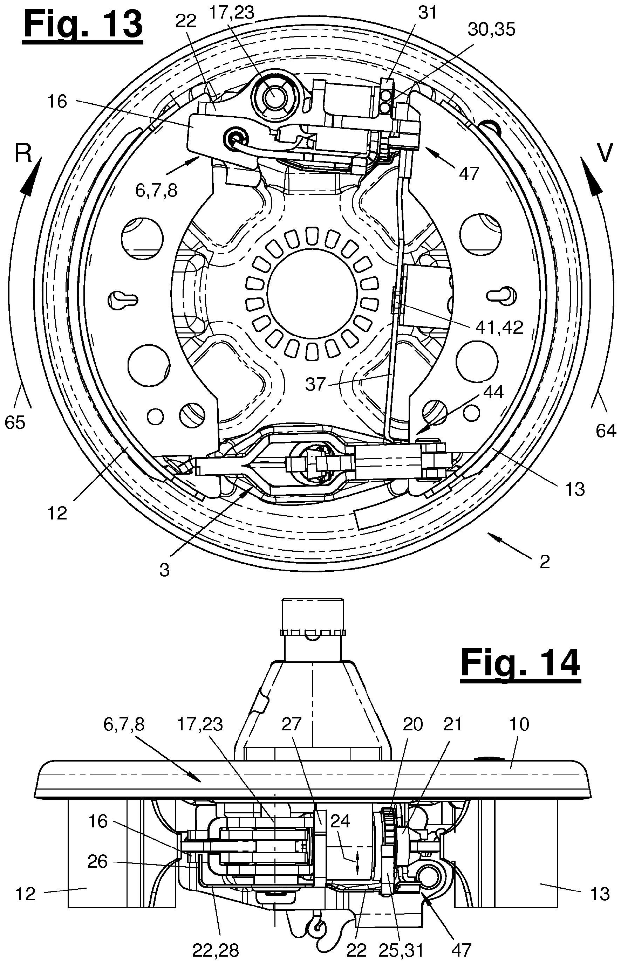

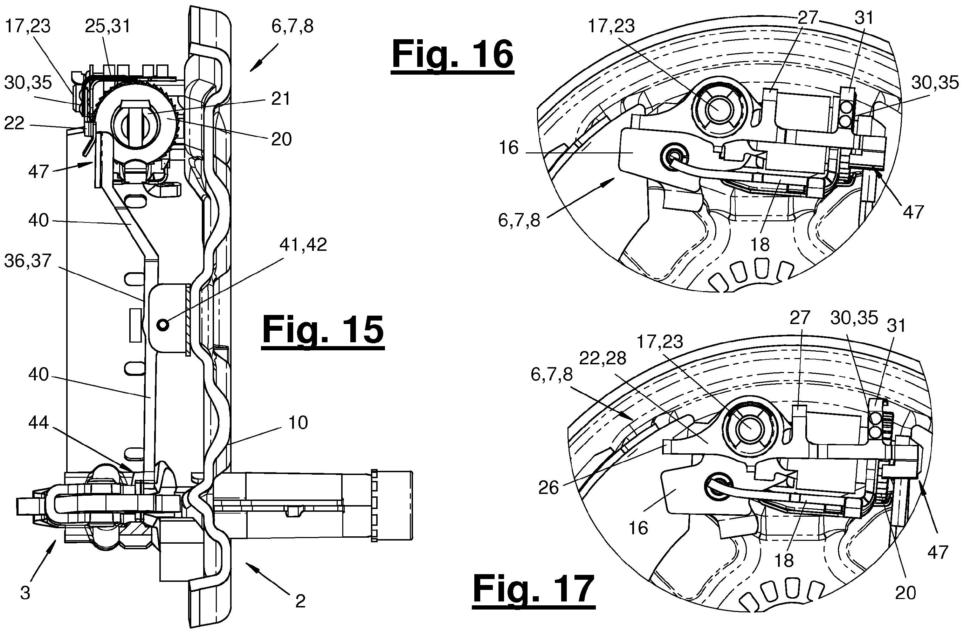

Figur 16 und 17 zeigen die Aktivierungs- und Deaktivierungsstellung unter Einwirkung des als Blattfederarm ausgebildeten Deaktivierungs- oder Spannmittels (27). Figur 14 zeigt eine nach unten geklappte Seitenansicht und Figur 15 eine nach links geklappte Seitenansicht zur Draufsicht von Figur 13.

Bei der vierten und fünften Variante ist das Übertragungselement (36) der Nachstelleinrichtung als Seilzug (38) ausgebildet. Dementsprechend kann sich auch die Ausbildung und Anordnung der Nachstelleinrichtung (7) und der Aktivierungseinrichtung (8) ändern.

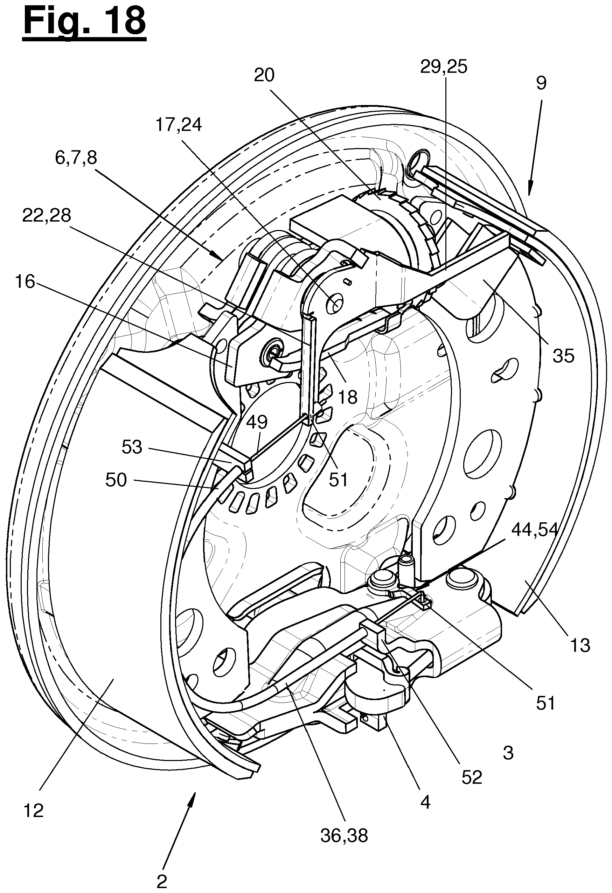

Bei der vierten Variante von Figur 18 bis 23 weist der Seilzug (38) ein ummanteltes (50) Seil (49) mit Seilanschlüssen (51) an seinen beiden Enden auf. Der eine Seilanschluss (51) ist mit der Betätigungseinrichtung (3) gekoppelt. Dies kann über ein Umlenkgetriebe (54) geschehen, welches das Antriebsmittel (44) darstellt und die Bewegungen des Spreizorgans (4) abgreift. Das Umlenkgetriebe (54) kann z.B. als Winkelhebel ausgebildet sein, der eine Schwenkachse an seiner Biegestelle aufweist und hierüber mit dem Gestell oder Gehäuse (5) der Betätigungseinrichtung (3) verbunden ist. Am einen und z.B. parallel zur Hauptebene des Bremsschilds (10) ausgerichteten Hebelarm greift z.B. ein seitlich vorstehender Mitnehmerzapfen am Spreizhebel (4) an und dreht hierüber den Winkelhebel. Am anderen Hebelarm kann der Seilanschluss (51) angeordnet und das Seil (49) eingehängt sein.

Der andere Seilanschluss (51) befindet sich am Nachstellorgan (22), welches hier als z.B. rechtwinklig abgewinkelter Nachstellhebel aus einem Blechstreifen ausgebildet ist und wie in den vorigen Ausführungsbeispielen auf der Oberseite des Gehäuses (19) der Rückfahrautomatik (6) angeordnet ist. Die Schwenkachse des Nachstellhebels (22) ist in diesem Fall die Nachstellachse (24). Sie kann gleichachsig oder parallelachsig zur Schwenkachse (17) des Ausweichorgans (16) ausgerichtet und relativ ortsfest, z.B. am Gehäuse (19) der Rückfahrtautomatik (6), angeordnet sein. Der Seilanschluss (51) befindet sich am freien Ende des vorderen abgewinkelten Hebelarmes (28) und ist als z.B. einseitige Schleppverbindung ausgebildet, wobei am Seilende eine Verdickung oder dergleichen angeordnet ist, die in Zugrichtung des Seilzugs (38) den Hebelarm (28) hintergreift und bei Bremsbetätigung anzieht. Der Hebelarm (28) ist hier zur Betätigungseinrichtung (3) hin ausgerichtet.

Der Mantel (50) des Seilzugs (38) weist zwei endseitige Mantelanschlüsse (52,53) auf. Der eine Mantelanschluss (52) ist am Gestell (5) der Betätigungseinrichtung (3) angeordnet, wobei das Seil (49) ein Stück bis zum Antriebsmittel (44) übersteht. Der andere Mantelanschluss (53) befindet sich an der bei Rückwärtsfahrt auflaufenden Bremsbacke (12) und ist z.B. an deren Steg (15) stehend angeordnet. Der Mantelanschluss (53) wird bei den Bremsbackenbewegungen im Bremsfall und bei Rückwärtsfahrt mitbewegt.

Der hintere Hebelarm (29) des Nachstellorgans (22) ist längs der Achse des Gewindestößels (21) ausgerichtet und greift über das Stellteil (20). Er steht mit einem an seiner Unterseite befindlichen Stellorgan (25), z.B. einer Stellnase, mit dem Zahnrad (20) in Eingriff. Im Bremsbetätigungsfall schwenkt der hintere Hebelarm (29) über das Stellteil (20) und sorgt bei Verschleißauftreten für dessen entsprechende Nachstellung.

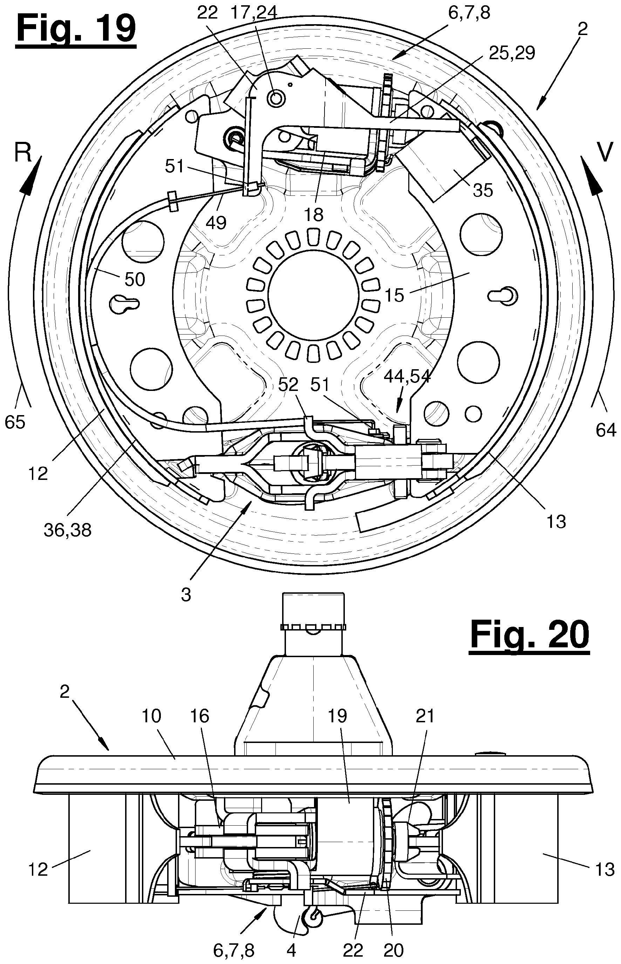

Das Nachstellorgan (22) schwenkt gemäß Figur 18 und 19 im Betätigungsfall im Uhrzeigersinn. Die Bewegung in Gegenrichtung kann einerseits unter Einwirkung einer Rückstellfeder (nicht dargestellt) stehen und andererseits begrenzt sein. Hierfür kann sich ein entsprechender Begrenzer am Gehäuse (19) oder an anderer Stelle befinden.

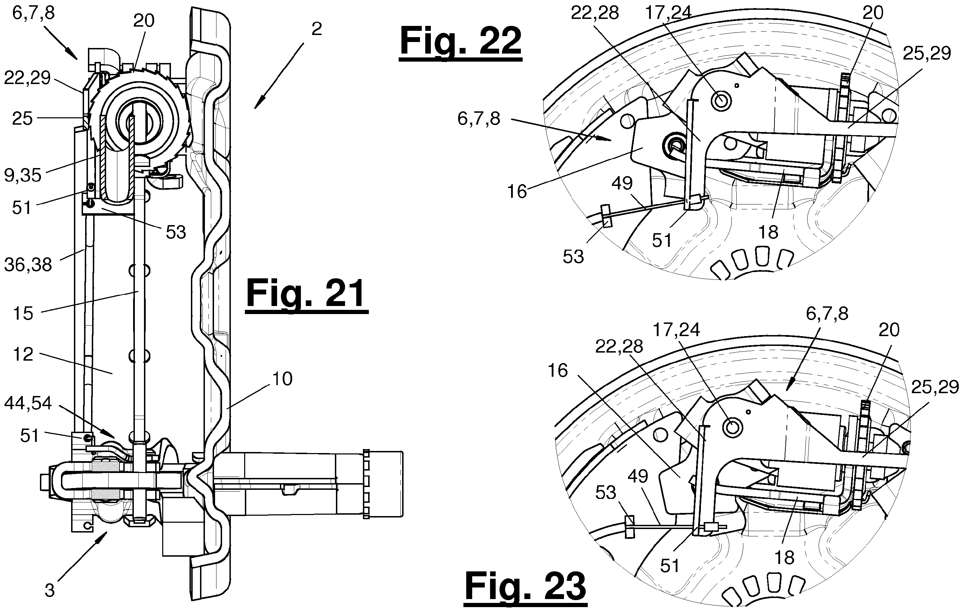

Die Aktivierungseinrichtung (8) weist in diesem Ausführungsbeispiel ein Aktivierungselement auf, das von der vorerwähnten Rückstellfeder gebildet wird. Das Deaktivierungsmittel (27) kann in diesem Fall vom nachstellseitigen Seilanschluss (51) und von der einseitigen Schleppverbindung zwischen Zugseil (49) und vorderem Hebelarm (28) gebildet werden. Bei Rückwärtsfahrt kann sich durch die Ausweichbewegung des Ausweichorgans (16) die auflaufende Bremsbacke (12) zum Gestell (19) der Rückfahrautomatik (6) und zum Nachstellorgan (22) hin bewegen. Hierbei wird der Seilzug (38) mit dem Mantelanschluss (53) und dem Zugseil (49) mitbewegt. Durch die einseitige Schleppverbindung schiebt sich das Zugseil (49) durch die Aufnahmeöffnung am Hebelarm (28), wobei der Seilanschluss (51) geöffnet wird. Wenn nun durch die Auflaufeinrichtung die Betätigungseinrichtung (3) den Seilzug und das Zugseil (49) anzieht, führt diese Anziehbewegung wegen des geöffneten Seilanschlusses (51) nicht zu einer Bewegung des Nachstellorgans (22). Der Anspannweg kompensiert sich mit der Erschlaffung des Seilzugs (38) bzw. mit dem Ausschubweg des Zugseils (49) durch die Aufnahmeöffnung im Hebelarm (28). Bei anschließender Vorwärtsfahrt fährt die Bremsbacke (12) mit dem Mantelanschluss (53) und dem Zugseil (49) wieder in die Ausgangsstellung zurück, wobei der Seilanschluss (51) wieder geschlossen wird. Figur 22 und 23 verdeutlichen die vorbeschriebenen Betriebszustände und den geschlossenen und geöffneten Seilanschluss (51).

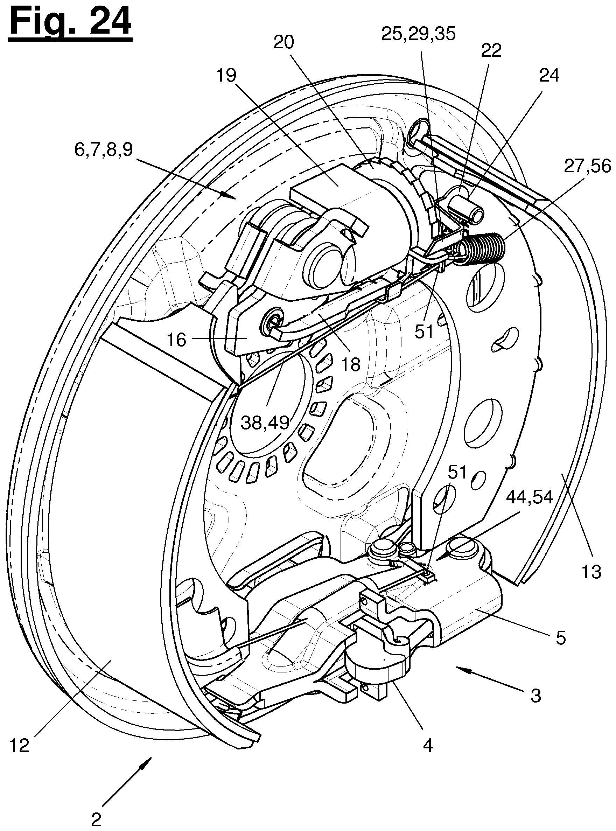

Bei der fünften Variante von Figur 24 bis 27 weist der Seilzug (38) ein offenes Zugseil (49) ohne Ummantelung auf, welches in einem U-förmigen Bogen verlegt ist und dabei über Seilumlenkungen (55) an der bei Rückwärtsfahrt auflaufenden Bremsbacke (12) geführt ist. Die z.B. zwei Seilumlenkungen (55) definieren eine Schlaufe an diesem Bremsbackenbereich.

Der betätigungsseitige Seilanschluss (51) und das Antriebsmittel (44) kann das gleiche wie bei der vorbeschriebenen vierten Variante sein. Unterschiede bestehen hinsichtlich des Seilzugs (38) und auch des Nachstellorgans (22).

Das Nachstellorgan (22) ist hier wieder als Winkelhebel ausgebildet und besitzt zwei etwa rechtwinkelig zueinander angeordnete Hebelarme (28,29). Der hierdurch gebildete Nachstellhebel (22) ist in diesem Fall an der bei Rückwärtsfahrt ablaufenden Bremsbacke (13) angeordnet und z.B. mit seiner Schwenk- und Nachstellachse (24) an deren Steg (15) gelagert. Der vordere Hebelarm (28) ist wieder zur Betätigungseinrichtung (3) hingerichtet und trägt am freien Ende den Seilanschluss (51), der auch hier als einseitige Schleppverbindung ausgebildet ist. Außerdem greift am Hebelarm (28) eine rückstellende Feder (56) an, die den Hebelarm (28) gegen das Ende des Zugseils (49) spannt. Alternativ oder zusätzlich kann ein in Figur 24 gezeigter brems- oder backenfester Anschlag für den Hebelarm (29) vorhanden sein. Der hintere Hebelarm (29) steht wieder mit dem Stellteil (20) in Eingriff und ist parallel oder leicht schräg zur Längsachse des Gewindestößels (21) ausgerichtet. Die Schwenkachse des Nachstellhebels (22) bildet die Nachstellachse (24).

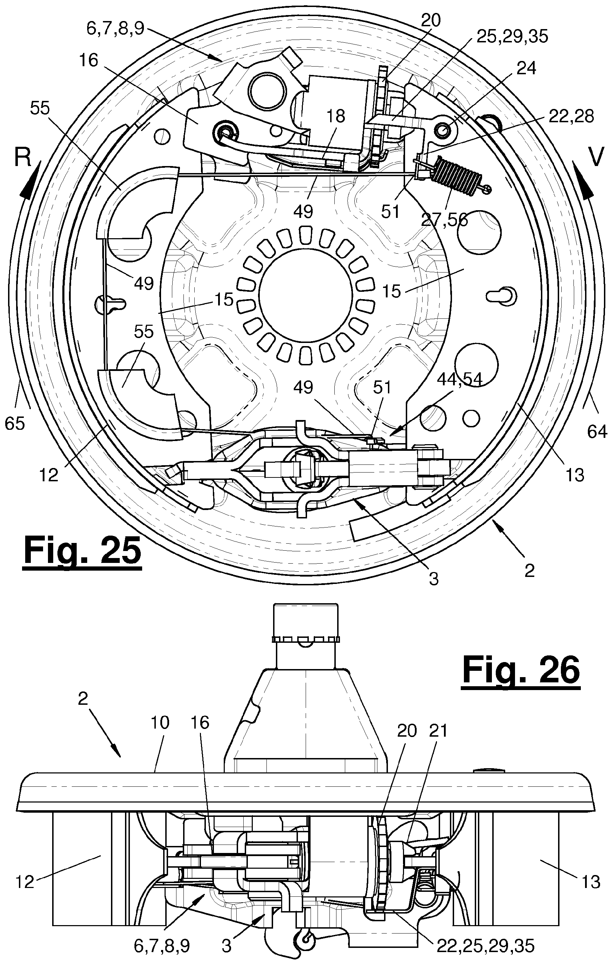

Im normalen Bremsfall zieht der Seilzug (49) bei Betätigung den Hebelarm (28) gegen die an der Bremsbacke (12) abgestützte Feder (56) und dreht dabei den Nachstellhebel (22) gemäß Figur 24 und 25 im Uhrzeigersinn, wobei im Fall von Bremsverschleiß eine Nachstellung erfolgt.

Bei Rückwärtsfahrt weicht die dann auflaufende Bremsbacke (12) zur Rückfahrautomatik (6) hin aus, wobei der Seilzug (38) durch die Mitnahme der Seilumlenkungen (55) erschlafft. Die unter Vorspannung stehende Feder (56) kann dadurch den Nachstellhebel (22) gegen den Uhrzeigersinn drehen und dabei den Hebelarm (29) vom Stellteil (20) lösen. Die Feder (56) bildet hier das Deaktivierungsmittel (27).

Die vorbeschriebenen fünf Varianten der Radbremse (2) zeigen auch die eingangs erwähnte Thermoabschaltung (9). Diese weist jeweils ein thermisches Abschaltmittel (35) auf, welches auf die Nachstelleinrichtung (7) einwirkt und den Eingriff des Nachstellelements (25) am Stellteil (20) bei Überschreiten einer Temperaturschwelle und bei Auftritt von Wärmedehnungen löst. Das Thermoelement (35) kann dabei in beliebig geeigneter Weise konstruktiv ausgebildet sein und auf Temperaturen unter Entfaltung einer Kraftwirkung und auch einer Bewegung reagieren. Ein Thermoelement (35) kann z.B. als Bimetallstreifen, als Thermobügel oder dgl. ausgebildet sein. In den fünf Varianten befindet sich das Thermoelement (35) jeweils in der Nähe der Rückfahrautomatik (6).

In der ersten Variante von Figur 1 bis 5 ist das Thermoelement (35) als gebogener Bimetallstreifen ausgebildet, dessen freies Ende unter den Stellarm (31) ragt und bei Erwärmung nach außen sich bewegt, wobei es den Stellarm (31) mitnimmt und den Nachstelleingriff löst. Das Thermoelement (35) kann relativ ortsfest am Bremsschild (10) oder alternativ an der in Rückwärtsfahrt ablaufenden Bremsbacke (13) angeordnet sein.

In der zweiten Variante von Figur 6 bis 9 ist das Thermoelement (35) als im Mittelbereich abgekröpfter und dabei stellenweise nach außen ausgebauchter Thermobügel ausgebildet, der mit seinem freien Ende unter einen nach unten und zum Bremsschild (10) hin ragenden Ansatz des Schwenkhebels (32) greift und diesen bei Wärmedehnungen wegbiegt. Die Befestigung des Thermoelements (35) kann die gleiche wie in der ersten Variante sein.

Bei der dritten Variante von Figur 12 bis 17 befindet sich das Thermoelement (35) auf dem vom hinteren Hebelarm (29) seitlich wegragenden und nach unten abgewinkelten Stellarm (31). Der Stellarm (31) kann hierbei zweiteilig ausgebildet sein, wobei ein temperaturempfindlicher Teil eine L-Form aufweist und das abgewinkelte Ende mit der Stellnase (25) bildet. Das Thermoelement (35) ist mit einem aus anderem Metall bestehenden seitlichen Ansatz (30) des hinteren Hebelarms (29) verbunden. Hierdurch wird ein Bimetallbügel gebildet.

Bei der vierten Variante von Figur 18 bis 23 ist das Thermoelement (35) an der bei Rückwärtsfahrt ablaufenden Bremsbacke (13) angeordnet und befindet sich z.B. auf deren Steg (15). Das Thermoelement (35) ist hier als U-förmig gebogener Bügel ausgeführt, der unter das freie Ende des hinteren Hebelarms (29) greift. Bei übermäßigen Temperaturen und Wärmedehnung spreizt sich der Thermobügel und hebt mit seinem oberen Arm den Hebelarm (29) vom Stellteil (20) ab.

Bei der fünften Variante von Figur 24 bis 27 ist das Thermoelement (35) ebenfalls am Nachstellorgan (22) angeordnet. Der abgewinkelte Hebelarm (29) kann z.B. aus einem Bimetall bestehen.

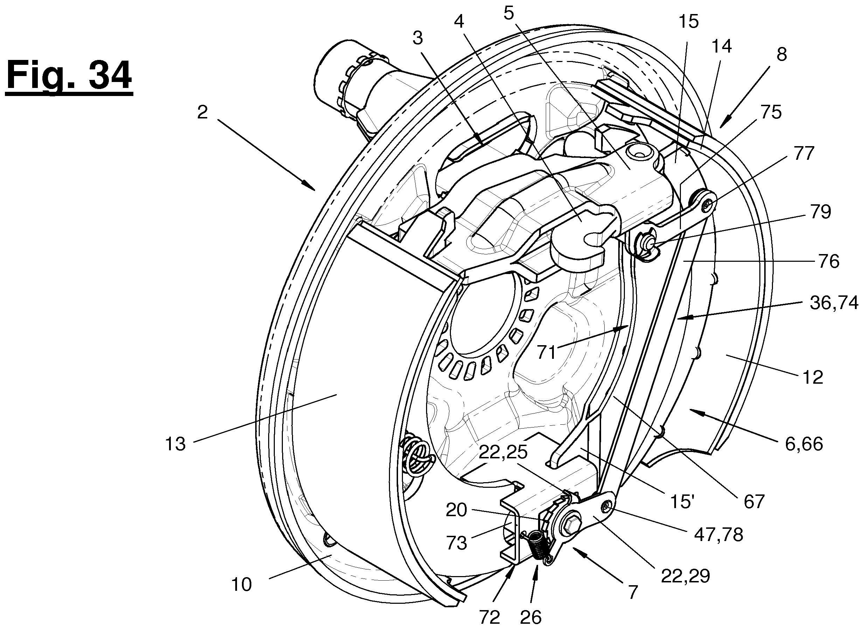

Figur 30 bis 33 zeigen eine sechste Variante und Figur 34 bis 37 eine siebte Variante der Radbremse (2). Sie ist ebenfalls für das vorbeschriebene und in Figur 28 und 29 gezeigte Fahrzeug (57), insbesondere Fahrzeuganhänger, vorgesehen.

Die Radbremse (2) besitzt auch in der sechsten und siebten Variante eine Rückfahrautomatik (6) und eine automatische Nachstelleinrichtung (7) zum Nachstellen der Bremswirkung im Fahrbetrieb. Die Nachstelleinrichtung (7) ermöglicht die Kompensation von Bremsenverschleiß, z.B. Verschleiß der Bremsbackenbeläge, der Bremstrommel etc. und ist über ein Übertragungselement (36) mit einer Betätigungseinrichtung (3) der Radbremse (2) verbunden. Für die Nachstelleinrichtung (7) ist eine Aktivierungseinrichtung (8) vorhanden, welche die Nachstelleinrichtung (7) bei Vorwärtsfahrt aktiviert und bei Rückwärtsfahrt deaktiviert. Ferner kann die Nachstelleinrichtung (7) eine Thermoabschaltung (9) aufweisen, welche die Nachstelleinrichtung (7) bei übermäßiger Erwärmung deaktiviert.

Die Bremsbacken (12,13) bestehen in der einen sechsten Variante von Figur 30 bis 33 aus einem Steg (15) mit einem gebogenen Belagträger (14), auf dem ein Brems- oder Reibbelag angeordnet ist. Zwischen den Bremsbacken (12,13) und deren Stegen (15) ist am einen Ende die schwimmend gelagerte Betätigungseinrichtung (3) und am anderen Ende eine Abstützung (72) angeordnet, welche bei Vorwärtsfahrt eine ortsfeste oder bremsschildfeste Abstützung bietet, welche die Backenenden miteinander verbindet und im normalen Bremsbetrieb ortsfest abstützt. Bei der einen sechsten Variante ist die Rückfahrautomatik (6) an der Abstützung (72) angeordnet und kann deren Abstützfunktion übernehmen.

Die Betätigungseinrichtung (3), die auch als Zuspanneinrichtung oder Spreizeinrichtung bezeichnet wird, kann in beliebig geeigneter Weise ausgebildet sein und ist z.B. als ein Spannschloss gestaltet, welches von einem Betätigungsorgan, z.B. einem Bremsseil bzw. einem Bowdenzug, betätigt wird. Die Betätigungseinrichtung (3) besitzt ein die Bremsbacken (12,13) distanzierendes Spreizorgan (4), welches z.B. als schwenkbarer Spannhebel ausgebildet ist, der mittels einer Schwenkachse an einem gabelförmigen Gestell oder Gehäuse (5) drehbar gelagert und mit dem Betätigungsorgan verbunden ist. Der Spannhebel (4) hat an einem Hebelende eine Backenaufnahme, die als Ausnehmung oder als Gabel gestaltet ist und die formschlüssig mit dem Steg (15) der benachbarten Bremsbacke (12) in Eingriff steht. Am Gehäuse (5) ist gegenüberliegend eine zweite Backenaufnahme zum Eingriff mit der anderen Bremsbacke (13) angeordnet. Am Gehäuse (5) ist ferner ein seitlich abstehender Anschlagzapfen (80) angeordnet, der z.B. mit der Lagerachse des Spannhebels (4) fluchtet.

Die Radbremse (2) ist mit der erwähnten Rückfahrautomatik (6) versehen, welche bei Rückwärtsfahrt des Rads (1) die Bremswirkung mindert oder aufhebt, wobei zumindest eine Bremsbacke (12,13) eine Ausweichbewegung durchführt. Für die Ausbildung der Rückfahrautomatik (6) zeigen die beiden Varianten sechs und sieben verschiedene Möglichkeiten.

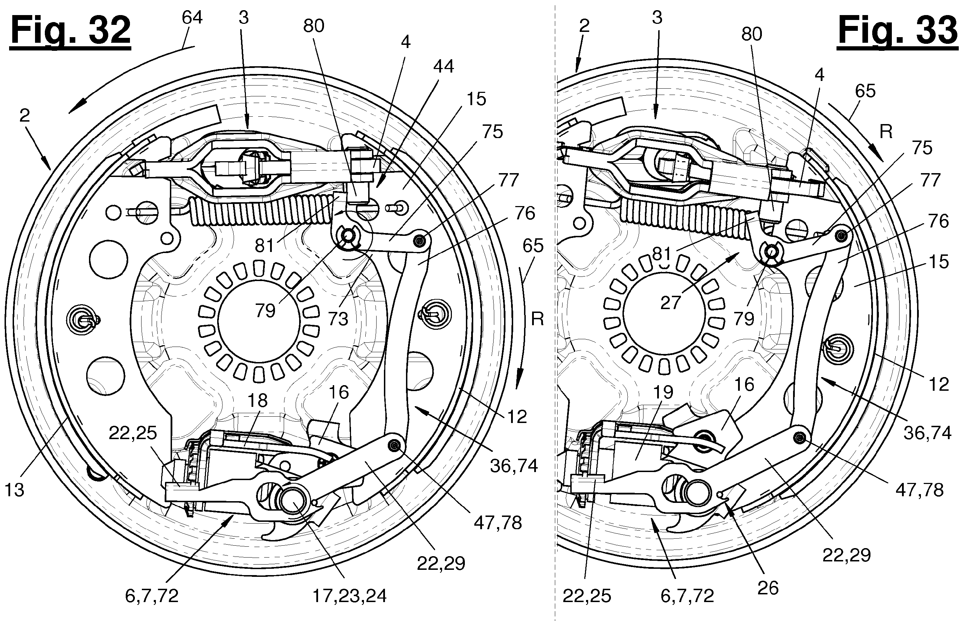

In der einen Variante von Figur 30 bis 33 ist die Rückfahrautomatik (6) der Betätigungseinrichtung (3) diametral gegenüberliegend an der anderen Seite der Radbremse (2) angeordnet und kann die Abstützung (72) bilden oder kann dieser zugeordnet sein. Die Rückfahrautomatik (6) kann dabei in verschiedener Weise ausgebildet und angeordnet sein. In der gezeigten Ausführungsform ist sie entsprechend der EP 0 261 660 A1 ausgebildet und mit ihren Teilen beispielhaft in Figur 30 bis 33 und dargestellt. Figur 33 zeigt dabei eine perspektivische Ansicht der Rückfahrautomatik (6).

Diese Rückfahrautomatik (6) weist ein bei Rückwärtsfahrt nachgebendes bewegliches Ausweichorgan (16) auf, welches mit der bei Rückwärtsfahrt auflaufenden Bremsbacke (12) oder sog. Primärbacke in Eingriff steht und eine gegenseitige Annäherung der Bremsbacken (12,13) ermöglicht. Figur 32 und 33 zeigen dies im Vergleich, wobei Figur 32 die neutrale Betriebs- oder Vorwärtsfahrstellung und Figur 33 die Betriebsstellung bei Rückwärtsfahrt verdeutlicht.

Das Ausweichorgan (16) ist z.B. als Schwenkhebel ausgebildet, der über eine relativ ortsfeste bzw. bremsschildfeste Schwenkachse (17) unter Einwirkung einer nicht dargestellten Feder drehen kann und z.B. mittels einer frei drehbaren Führungsrolle am Rand des Stegs (15) der bei Rückwärtsfahrt auflaufenden Bremsbacke (12) anliegt. Der Schwenkhebel (16) wirkt über eine Nocke (nicht dargestellt) mit einer Gewindehülse zusammen, die in einem relativ ortsfesten bzw. schildfesten Gestell oder Gehäuse (19) drehbar und axial verschieblich gelagert ist. Die Gewindehülse ist mit einem nachfolgend erläuterten Stellteil (20) der Nachstelleinrichtung (7) verbunden und steht über ein Innengewinde mit einem eingesetzten Gewindestößel (21) im Schraubeingriff, welcher aus dem Gehäuse (19) ragt und am freien Ende mit der zweiten und bei Rückwärtsfahrt ablaufenden Bremsbacke (13) in Eingriff steht. Die Längsachse des Gewindestößels (21) und der Gewindehülse verläuft zwischen der Schwenkachse (17) und der Führungsrolle. Außerdem ist der Schwenkhebel (16) mittels eines bügelartigen, geschlitzten Stützglieds (18) zusätzlich mit der Gewindehülse und dem Gewindestößel (21) verbunden. Der Gewindestößel (21), die Gewindehülse und der Schwenkhebel (16) sowie ggf. ein ortsfester Anschlag wirken zusammen als Abstützung (72) zwischen die Bremsbacken (12,13).

In Figur 32 und 33 sind die Drehrichtungen des Fahrzeugrads (1) bzw. der Radbremse (2) in Vorwärtsfahrt als Pfeil (64) und in Rückwärtsfahrt als Pfeil (65) dargestellt. Die Rückwärtsdrehrichtung ist außerdem durch ein "R" gekennzeichnet. Beim Bremsen in Vorwärtsfahrt drückt die dann auflaufende Bremsbacke (13) über den Gewindestößel (21) und die Gewindehülse auf das Ausweichorgan (16) und drückt dieses zur anderen ablaufenden Bremsbacke (12) hin sowie gegen einen ortsfesten Anschlag. Die bei Vorwärtsfahrt auflaufende Bremsbacke (13) entwickelt eine höhere Presskraft als die ablaufende Bremsbacke (12), so dass letztere sich über das Ausweichorgan (16) ortsfest abstützen und ebenfalls Bremswirkung entfalten kann. In der dargestellten Ausführungsform wirkt die Radbremse (2) bei Vorwärtsfahrt als Simplex-Bremse mit ortsfester Abstützung beider Bremsbacken (12,13). Sie kann alternativ hierzu als Servo-Bremse ausgeführt sein, wenn der ortsfeste Anschlag des Ausweichorgans (16) entfällt und das Ausweichorgan (16) die Bremskräfte der bei Vorwärtsfahrt auflaufenden Bremsbacke (13) durch eine kleine Bewegung auf die ablaufende Bremsbacke (12) überträgt.

Bei Rückwärtsfahrt betätigt die Auflaufbremseinrichtung (62) die Radbremse (2), wobei der Auflaufweg und damit auch der Zuspannweg an der Zuspanneinrichtung (3) begrenzt ist. Bei der Rückwärts-Drehrichtung (65) wird die Bremsbacke (12) zur auflaufenden Backe und drückt gegen das Ausweichorgan (16), welches nachgibt und eine einwärts gerichtete Schwenkbewegung um seine gestellfeste Achse (17) ausführt. Dadurch verliert die auflaufende Backe (12) ihre Abstützung und kann keine signifikante Bremswirkung entfalten. Die Betätigungseinrichtung (3) folgt durch ihre schwimmende Lagerung dieser Ausweichbewegung der auflaufenden Bremsbacke (12), wodurch auch die bei Rückwärtsfahrt ablaufende Bremsbacke (13) zum Bremsen keine hinreichende Abstützung findet und ebenfalls keine signifikante Bremswirkung entfaltet. Figur 33 zeigt diese Drehverlagerung der Betätigungseinrichtung (3) und der Bremsbacken (12,13) in Rückwärts-Drehrichtung (65). Bei Rückwärtsfahrt wird somit die Bremswirkung der Backen (12,13) aufgehoben oder zumindest wesentlich vermindert.

Erst wenn die Betätigungseinrichtung (3) durch die Feststellbremseinrichtung (63), z.B. den Handbremshebel oder den Federspeicher, noch weiter gespannt wird, findet eine Bremswirkung statt. Das schwenkende Ausweichorgan (16) drückt bei Rückwärtsfahrt über die interne Nocke (nicht dargestellt) und den verschieblichen Gewindestößel (21) auf die ablaufende Bremsbacke (13) und schiebt diese in Rückwärtsdrehrichtung (65). Gegen Ende des weiteren Zuspannwegs kommt das Ausweichorgan (16) außerdem mit dem Stützglied (18) in Eingriffsstellung und schiebt dann dieses und den angebundenen Gewindestößel (21) weiter in Rückwärtsdrehrichtung (65). Hierbei werden beide Bremsbacken (12,13) mitgenommen, bis die ablaufende Bremsbacke (13) gegen einen nahe der Zuspanneinrichtung (3) relativ ortsfest angeordneten Festanschlag anläuft und hier eine Abstützung findet. Die Radbremse (2) kann dann dank der Abstützung gespannt werden und Bremswirkung entfalten, wobei sie als Servo-Bremse wirkt.

In Abwandlung des gezeigten und beschriebenen Ausführungsbeispiels kann die Rückfahrautomatik (6) in anderer Weise ausgebildet sein und ein anderes Ausweichorgan (16) aufweisen. Dies kann z.B. eine Ausbildung entsprechend der anderen Ausführungsformen in der EP 0 261 660 A1 sein. Die nachfolgend erläuterte andere Variante von Figur 34 bis 37 zeigt eine weitere Abwandlung der Rückfahrautomatik (6).

Die Radbremse (2) besitzt eine automatische Nachstelleinrichtung (7) zum Nachstellen der Bremswirkung im Fahrbetrieb. Hierüber kann auch die Grundeinstellung der Radbremse (2) vorgenommen werden. Die Nachstelleinrichtung (7) ist bei der einen Variante von Figur 30 bis 33 an der als Abstützung (72) fungierenden Rückfahrautomatik (6) angeordnet und dient dazu, die Abstützbreite zwischen den Bremsbacken (12,13) im normalen Bremsbetrieb zu vergrößern. Mit zunehmendem Verschleiß wird der zum Anlegen der Bremsbacken (12,13) an der Bremstrommel (11) erforderliche Zuspannweg oder Spreizweg größer. Mit der Nachstelleinrichtung (7) wird diese Wegvergrößerung kompensiert.

Die Nachstelleinrichtung (7) weist ein Stellteil (20) und ein mit dem Stellteil (20) in lösbaren Eingriff bringbares Nachstellorgan (22) auf. Das Stellteil (20) ist beispielsweise als Zahnrad ausgebildet und ist z.B. mit der Gewindehülse der Rückfahrautomatik (6) verbunden, wobei eine Zahnraddrehung eine Schraubbewegung der Gewindehülse gegenüber dem drehfest gehaltenen Gewindestößel (21) und eine Vergrößerung der Abstützbreite bewirkt. Die Zähne des Zahnrads (20) haben z.B. eine Sägezahnform mit unterschiedlich steilen Zahnflanken. Das Nachstellorgan (22) ist z.B. als schwenkbarer Nachstellhebel ausgebildet, der um eine Schwenkachse (23) schwenkbar gelagert ist und der ein Nachstellelement (25) aufweist, welches mit dem Zahnrad (20) in Eingriff treten kann. Die Nachstellung erfolgt über eine Drehbewegung des Nachstellorgans (22), wobei die Schwenkachse (23) zugleich die Nachstellachse (24) ist.

In der Ausführungsform von Figur 30 bis 33 ist der Nachstellhebel (22) schwenkbar am Gehäuse (19) der Rückfahrautomatik (6) gelagert. Seine Schwenkachse (24) kann hierbei parallelachsig oder gleichachsig zu der Schwenkachse (17) des Ausweichorgans (16) angeordnet sein. Der Nachstellhebel (22) ist als Blechstreifen ausgebildet und liegt flach auf oder über der vom Bremsschild (10) abgewandten Oberseite des Gehäuses (19) der Rückfahrautomatik (6).

Der gebogene Nachstellhebel (22) weist zwei Hebelarme (28,29) und eine etwa mittige Lagerstelle auf, die z.B. als einrastbares Drehlager ausgebildet ist. Der vordere Hebelarm (28) trägt am Ende ein flanschartig abgebogenes Nachstellelement (25). Der hintere Hebelarm (29) ist zu der in Rückwärtsfahrt auflaufenden Bremsbacke (12) gerichtet und ist mit dem Übertragungselement (36) verbunden (78).

Beim Bremsen wird der Nachstellhebel (22) von der Betätigungseinrichtung (3) mittels des Übertragungselements (36) gedreht und schwenkt mit seinem Nachstellelement (25) relativ zum Stellteil (20), wobei der Schwenkweg proportional zum Betätigungsweg ist. Bei Auftreten von Belagverschleiß ist der Schwenkweg so groß, dass das Nachstellelement (25) über einen Zahn gleitet und das Nachstellorgan (22) beim Rückweg das Stellteil (20) um einen Zahn dreht, wodurch in der vorerwähnten Weise die Stützbreite der Bremsbacken (12,13) vergrößert wird.

Das Übertragungselement (36) ist als Getriebe (74) ausgebildet, vorzugsweise als Lenkergetriebe. Das mehrteilige Lenkergetriebe (74) weist z.B. einen Schwenkhebel (75) und einen Lenker (76) auf. Der Schwenkhebel (75) ist einerseits mit der Betätigungseinrichtung (3) und andererseits mit dem Lenker (76) verbunden, wobei letzter mit dem Nachstellorgan (22) verbunden ist. Die Bewegungsebene der Getriebeteile (75,76) ist parallel zur Hauptebene des Bremsschilds (10) ausgerichtet und befindet sich über dem Steg (15).

Der Schwenkhebel (75) hat eine abgewinkelte Form mit zwei etwa rechtwinklig zueinander ausgerichteten Armen und einem zentralen Drehlager (79) nahe der Knickstelle. Das Drehlager (79) hat eine quer zum Bremsschild (10) ausgerichtete Drehachse und ist auf der bei Rückwärtsfahrt auflaufenden Bremsbacke (12) abgestützt. Das Drehlager (79) kann an einem Ansatz (71) des Stegs (15) angeordnet sein und wird bei den Bremsbackenbewegungen mitgenommen.

Der eine Arm des Schwenkhebels (75) ist mit einem Treibteil (80) der Betätigungseinrichtung (3), z.B. mit dem seitlichen Anschlagzapfen am Gehäuse (5), verbunden. Diese Verbindung stellt das Antriebsmittel (44) dar und ist z.B. eine einseitige Anschlag- oder Rückhalteverbindung, die alternativ auch beidseitig sein kann. Der besagte Hebelarm kann endseitig einen zum Bremsschild (10) abgebogenen Armansatz (81) aufweisen, der als Anschlag am z.B. zylindrischen Anschlagzapfen (80) anliegt und dieses hintergreift. Der bei Spreiz-Betätigung drehende Spannhebel (4) drückt die Bremsbacke (12) und damit das Drehlager (79) samt Schwenkhebel (75) vom Gehäuse (5) weg nach außen zur Bremstrommel (11) hin. Der am Treibteil (80) zurückgehaltene und vom Drehlager (79) beabstandete Armansatz (81) wirkt dieser Auswärtsbewegung entgegen, wodurch der Schwenkhebel (75) sich gegen den Uhrzeigersinn dreht, was in Figur 32 durch einen Pfeil angedeutet ist.

Der Schwenkhebel (75) weist am Ende des anderen Arms eine Verbindung (77) zum einen Ende des Lenker (76) auf, die z.B. als Drehgelenk oder Schwenklager ausgebildet ist. Der Lenker (76) weist am anderen Ende eine Verbindung (78) zum Nachstellorgan (22) auf, die ein Abtriebsmittel (47) bildet und ebenfalls als Drehgelenk oder Schwenklager ausgebildet ist. Der entlang der Bremsbacke (12) sich erstreckende Lenker (76) bildet eine Koppel zur Drehübertragung zwischen den Schwenkhebeln (22,75), wobei auch eine Übersetzung gebildet sein kann. Die Gelenke (77,78) können für eine permanente und in sich bewegliche Verbindung der Teile (75,76,22) bilden.

Beim Bremsen in Vorwärtsfahrt gemäß Figur 32 zieht der betätigte und drehende Schwenkhebel (75) über den Lenker (76) den Nachstellhebel (22) und dreht ihn gleichsinnig gemäß Pfeildarstellung, wobei im Verschleißfall eine Nachstellung erfolgt.

Bei Rückwärtsfahrt wird die Betätigungseinrichtung (3) ebenfalls gespreizt, wobei die Aktivierungseinrichtung (8) eine unerwünschte Nachstellung unterbindet. Bis die Bremsbacken (12,13) bei Rückwärtsfahrt an der Bremstrommel (11) in Anlage kommen, kann das Nachstellorgan (22) eine kleine, unwesentliche Drehbewegung ausführen.

Das Deaktivierungsmittel (27) mindert oder verhindert die Bewegungsweiterleitung im Übertragungselement (36) zwischen Betätigungseinrichtung (3) und Nachstellorgan (22). Sie kann das Getriebe (74), insbesondere das Lenkergetriebe, kollabieren oder einklappen lassen. Das Deaktivierungsmittel (27) wird hierbei von der beweglichen Anordnung des Drehlagers (79) gebildet. Die bei Rückwärtsfahrt ausweichende Bremsbacke (12) nimmt das Drehlager (79) in Rückwärts-Drehrichtung (65) zur Abstützung (72) hin mit, wobei durch diese Verlagerung die Drehbewegung des Schwenkhebels (75) kompensiert wird und das Nachstellorgan (22) nicht oder nur unwesentlich bewegt wird. Der Lenker (76) und das Nachstellorgan (22) bleiben in Ruhe wobei der verlagernde Schwenkhebel (75) sich um das Gelenk (77) dreht. Die Zuordnung von Stellteil (20) und Nachstellorgan (22) bleibt ebenfalls unangetastet. Figur 33 zeigt diese Betriebsstellung.

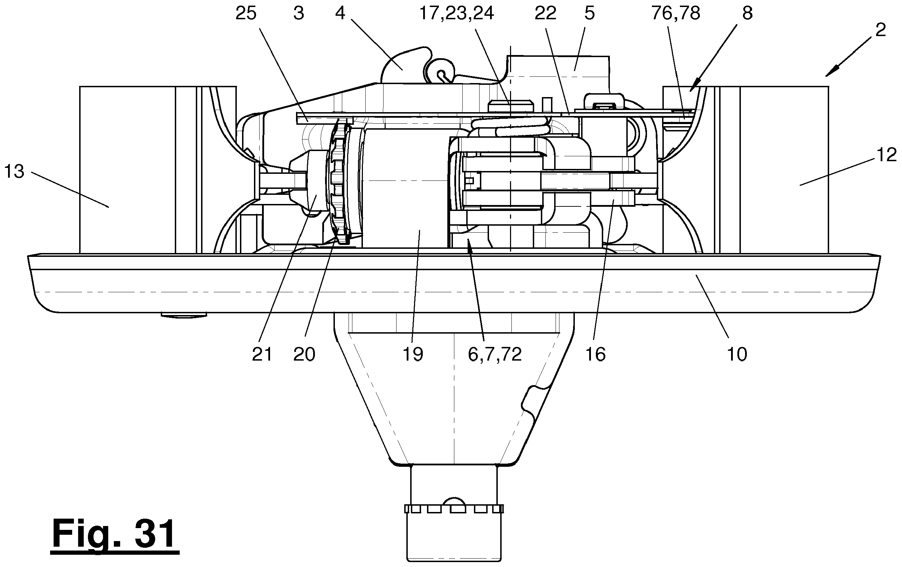

Bei erneuter Vorwärtsfahrt wird die ausgewichene Bremsbacke (12) zurückbewegt und das eingeklappte Getriebe (74) wieder gestreckt. Das Aktivierungsmittel (26) kann von einer Feder (vgl. Figur 30 und 31) oder dgl. gebildet werden, die z.B. den Schwenkhebel (75) in die Ausgangsstellung zurückdreht und den Mitnehmer (81) in Anlagestellung am Treibteil (80) hält. Am Nachstellorgan (22) kann ebenfalls eine Feder nebst Anschlag angeordnet sein, die dessen neutrale Ruhestellung definiert und auch bei Rückwärtsfahrt für Lagestabilität und eine gewisse Abstützung des Lenkers (76) sorgen kann.

Die andere siebte Variante von Figur 34 bis 37 unterscheidet sich von der sechsten Variante durch die Ausbildung und Anordnung der Rückfahrautomatik (6), der Abstützung (72), der Nachstelleinrichtung (7) und des Übertragungselements (36). Die Rückfahrautomatik (6) ist von der Abstützung (72) getrennt angeordnet und wird z.B. an der in Rückwärtsfahrt (65) ablaufenden Bremsbacke (12) durch Ausbildung einer Schiebebacke (66) realisiert. Die Bremsbacke (12) besteht hierbei aus einem Backenträger (67), der mit endseitigen Stegen (15') am Gehäuse (5) der Zuspanneinrichtung (3) und an der ebenfalls geänderten Abstützung (72) in Eingriff steht. Der Backenträger (67) ist im mittleren Bereich doppelwandig ausgebildet und weist hierdurch eine Aufnahmetasche (71) für die Schiebebacke (66) auf. Die Schiebebacke (66) wird von dem in die Aufnahmetasche (71) greifenden Steg (15) und dem Belagträger (14) sowie dem Bremsbelag gebildet.

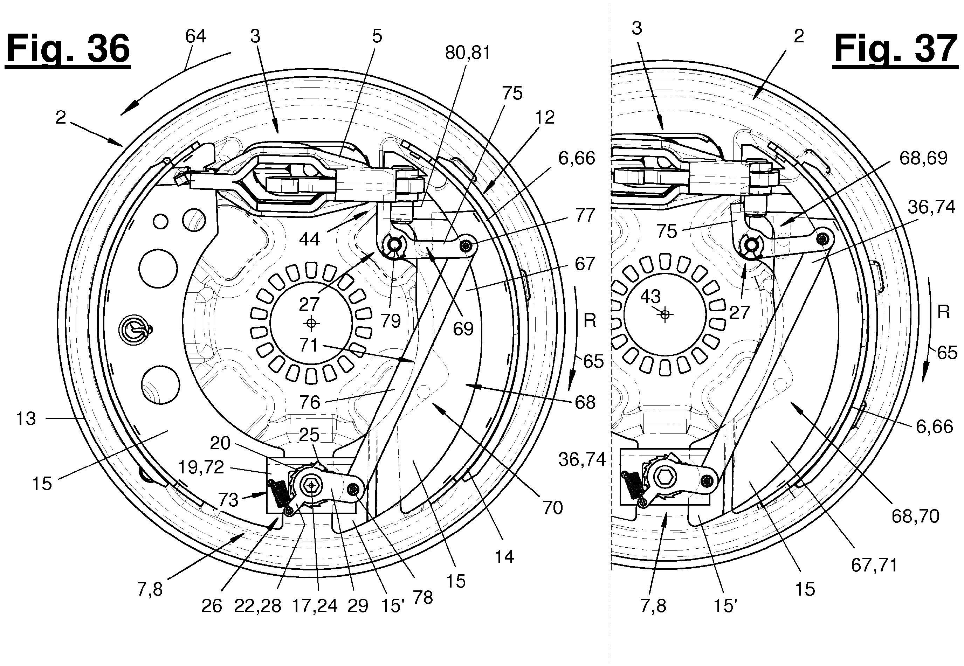

Wie Figur 36 und 37 in der Draufsicht verdeutlichen, wird die Schiebebacke (66) am Backenträger (67) mittels einer Führung (68) beweglich geführt und kann bei Rückwärtsfahrt (65) zur Abstützung (72) hin ausweichen. Die Führung (68) wird z.B. von einem oberen Führungselement (69) gebildet, welches im gezeigten Ausführungsbeispiel als Langlochführung ausgebildet ist. Diese besteht z.B. aus einem Zapfen am Backenträger (67), der die Taschenöffnung durchsetzt und der in eine langlochartige Nut am Rand des Stegs (15) der Schiebebacke (66) eingreift. Die Langlochführung (69) hat z.B. eine gerade Erstreckung und ist quer oder schräg zur Spreizrichtung der Betätigungseinrichtung (3) ausgerichtet.

Ein zweites unteres Führungselement (70) kann als Schrägführung ausgebildet sein und besteht z.B. aus einem weiteren Zapfen am Backenträger (67) und innerhalb der Aufnahmetasche (71), der mit einer schrägen Anlageschulter am Stegrand der Schiebebacke (66) im Eingriff steht. An den beiden Zapfen kann die Schiebebacke (66) mit ihrem Steg (15) entlang gleiten, wobei das obere Führungselement (69) am Boden der Langlochnut einen Anschlag für die zur Betätigungseinrichtung (3) hin gerichtete Schiebebackenbewegung bei Vorwärtsfahrt bzw. beim Vorwärtsbremsen und damit eine Backenabstützung bildet. Bei Rückwärtsfahrt kann das obere Führungselement (69) auch ein Schwenklager für die Schiebebackenbewegung gegenüber dem Backenträger (67) bilden. In diesem Fall wird die Schwenkbewegung auch durch das untere Führungselement (70) und die schräge Anlageschulter bestimmt. Das untere Führungselement (70) kann dabei auch eine Anschlagfunktion zur Begrenzung dieser Schwenkbewegung in Rückwärtsfahrt bieten.

Figur 36 zeigt die Stellung der Schiebebacke (66) im normalen Vorwärtsfahrbetrieb bzw. beim Vorwärtsbremsen.
Figur 37 verdeutlicht die Ausweichbewegung der Schiebebacke (66) in Rückwärts-Drehrichtung (65). In Figur 36 und 37 sind der Backenträger (67) mit durchgezogenen Linien und die Schiebebacke (66), insbesondere deren Steg (15) in der Aufnahmetasche (71), gestrichelt dargestellt.

Das Übertragungselement (36) ist auch in diesem Ausführungsbeispiel als Getriebe (74), insbesondere als Lenkergetriebe, ausgebildet und hat eine in der sechsten Variante entsprechende Ausbildung mit Getriebeteilen (75,76) sowie Antriebs- und Abtriebsmittel (44,47). Das Lager (79) ist in der siebten Variante von Figur 34 bis 37 allerdings am Steg (15) der Schiebebacke (66) angeordnet und folgt somit deren Bewegungen. Hierfür kann der Schiebebackensteg (15) ein ansatzförmiges Backenteil aufweisen, welches aus dem Backenträger (67) und dessen Aufnahmetasche (71) herausragt und das Lager (79) aufnimmt.

Die Abstützung (72) ist in der siebten Variante ebenfalls der Betätigungseinrichtung (3) diametral gegenüberliegend angeordnet. Sie ist von der Rückfahrautomatik (6) getrennt und besteht aus einem Gehäuse (19) mit einem darin verstellbar, z.B. drehbar, angeordneten Stützteil (73), in dem beidseits die Stege (15,15') der Bremsbacke (13) und des Backenträgers (67) anliegen. Das Stützteil (73) ist z.B. als eine um die Achse (17) drehbare Nocke ausgebildet. Deren Drehstellung bestimmt die Stützbreite und den Abstand zwischen den besagten Stegen (15,15'). Alternativ kann das Stützteil (73) als Spreizkeil oder in anderer geeigneter Weise ausgebildet sein.

Die Nachstelleinrichtung (7) weist auch bei diesem Ausführungsbeispiel ein Stellteil (20) und ein Nachstellorgan (22) auf, die allerdings anders als bei der einen sechsten Variante ausgebildet und angeordnet sind. Das Stellteil (20) ist als Zahnrad ausgebildet, welches drehschlüssig mit dem Stützteil (73), insbesondere der Nocke, verbunden und um eine Achse (17) drehbar ist. Durch eine Zahnraddrehung wird das Stützteil (73) mitgenommen und gedreht. Zugleich ist eine nicht dargestellte Abstützung vorhanden, die ein Rückdrehen von Stützteil (73) und Stellteil (20) verhindert.

Das Nachstellorgan (22) ist wieder als Nachstellhebel ausgebildet, der um die Nachstellachse (24) drehbar ist, wobei die Nachstellachse (24) mit der gemeinsamen Drehachse (17) von Stützteil (73) und Stellteil (20) zusammenfällt. Der Nachstellhebel (22) weist einen hinteren Hebelarm (29) auf, der wie in der sechsten Variante mit dem Übertragungselement (36), insbesondere mit dem Lenker (76) über ein Gelenk (78) oder dgl. verbunden ist. Am vorderen Hebelarm (28) greift in der anderen siebten Variante eine Feder an. Das Nachstellelement (25) ist an einem seitlichen Ansatz des Nachstellhebels (22) angeordnet und wirkt mit dem darunter liegenden Zahnrad (20) zusammen.

Beim Bremsen in Vorwärtsfahrt werden die Bremsbacken (12,13) von der Betätigungseinrichtung (3) gespreizt, wobei der hiervon betätigte Backenträger (67) bei seiner nach außen gerichteten Bewegung und durch das quer zu dieser Bewegungsrichtung ausgerichtete Führungselement (69) die Schiebebacke (66) und das Lager (79) mitnimmt. Wie in der einen sechsten Variante von Figur 30 bis 33 wird hierdurch der Schwenkhebel (75) gedreht und die Drehbewegung über dencLenker (76) auf den Nachstellhebel (22) zur gleichsinnigen Drehung übertragen. Bei Belagverschleiss oder dgl. ist der Drehweg so groß, dass das Nachstellorgan (22) auf dem Rückweg das Stellteil (20) sowie das Stützteil (73) mitnimmt und die Abstützbreite vergrößert.

Bei Rückwärtsfahrt weicht in der siebten Variante gemäß Figur 37 die Schiebebacke (66) mit ihrem Steg (15) am Backenträger (67) in Rückwärts-Drehrichtung (65) aus und führt dabei eine zur Abstützung (72) hin und nach innen zur Raddrehachse (43) gerichtete Verschiebe- und Drehbewegung durch die Führungselemente (69,70) aus. Durch diese Ausweichbewegung wird an der Schiebebacke (66) bzw. der Bremsbacke (12) keine Bremskraft aufgebaut. Die bei Rückwärtsfahrt ablaufende Bremsbacke (13) entwickelt ohnehin nur eine schwache Bremswirkung, was auch durch die schwimmende Betätigungseinrichtung (3) unterstützt wird. Unter Einfluss der Auflaufeinrichtung wird daher in Rückwärtsfahrt die Bremswirkung stark gemindert.

Durch eine von der Handbremseinrichtung eingeleitete zusätzliche Spann- und Betätigungsbewegung kann auch bei der siebten Variante noch eine Bremswirkung in Rückwärtsfahrt erzielt werden. Hierfür können die Schiebebacke (66) und der Backenträger (67) derart aufeinander abgestimmt sein, dass sie in eine kraft- und bewegungsübertragende Anschlagstellung kommen. Dies kann z.B. durch einen Anschlag des Stegs (15) der Schiebebacke (66) am abstützungsseitigen Rand der Aufnahmetasche (71) des Backenträgers (67) erfolgen. Figur 37 zeigt diese Situation.

Die Aktivierungseinrichtung (8) ist auch bei der siebten Variante vorhanden. Das Aktivierungsmittel (26) kann wie bei der sechsten Variante von einer in Figur 34, 36 und 37 dargestellten Feder gebildet werden, die z.B. den Schwenkhebel (75) in die Ausgangsstellung zurückdreht und den Mitnehmer (81) in Anlagestellung am Anschlagzapfen (80) hält. Die Feder am Nachstellorgan (22) wirkt dabei ebenfalls stabilisierend, wobei auch ein nicht dargestellter Anschlag vorhanden sein kann, der die Drehbewegung des Nachstellhebels (22) im Uhrzeigersinn begrenzt.

Das Deaktivierungsmittel (27) ist in beiden Varianten gleich und lässt z.B. bei Rückwärtsfahrt das Übertragungselement (36), insbesondere das Lenkergetriebe (74) kollabieren oder einklappen, wobei die Bewegungsweiterleitung von der Betätigungseinrichtung (3) zur Nachstelleinrichtung (7) gemindert oder unterbunden wird. Das Deaktivierungsmittel (27) wird auch bei der siebten Variante von der beweglichen Anordnung des Drehlagers (79) gebildet, das hier Ausweichbewegungen der Schiebebacke (66) bei Rückwärtsfahrt folgt.

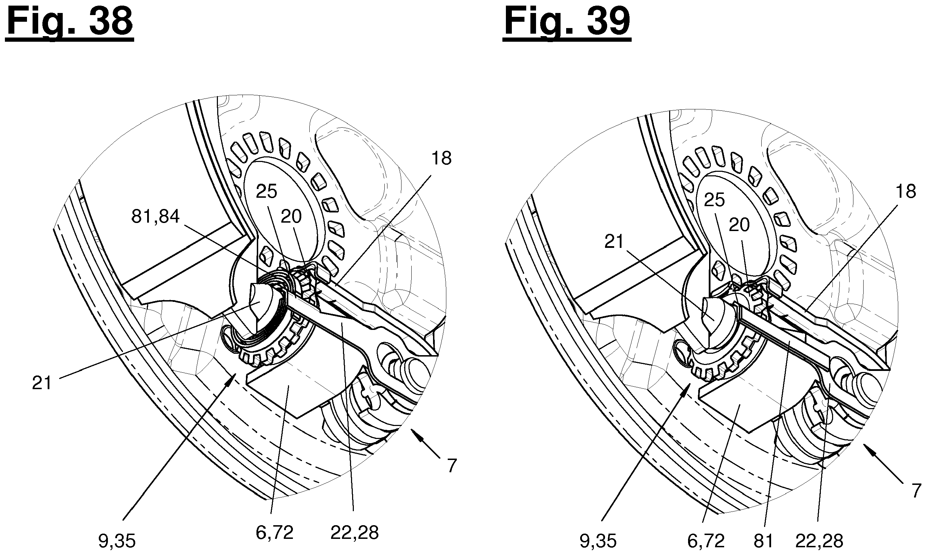

Die Aktivierungseinrichtung (8) und die Thermoabschaltung (9) sind als getrennte Einheiten ausgebildet und angeordnet, die unabhängig voneinander funktionieren können und die dabei auch unterschiedlich auf die Nachstelleinrichtung (7) einwirken können. In den nachfolgend beschriebenen Ausführungsvarianten von Figur 38 bis 43 sind unterschiedliche Ausführungsformen der Thermoabschaltung (9) angegeben.

Die Thermoabschaltung (9) weist jeweils ein thermisches Abschaltmittel (35) auf, welches auf die Nachstelleinrichtung (7) einwirkt und die Nachstellung verhindert. Hierzu kann es z.B. den Eingriff des Nachstellelements (25) am Stellteil (20) bei Überschreiten einer Temperaturschwelle und bei Auftritt von Wärmedehnungen lösen und/oder das Stellteil (20) blockieren. Das Thermoelement (35) kann dabei in beliebig geeigneter Weise konstruktiv ausgebildet sein und auf Temperaturen unter Entfaltung einer Kraftwirkung und auch einer Bewegung reagieren.

Die gezeigten Ausführungsbeispiele beziehen sich auf die eine Variante der Kombination der Rückfahrautomatik (6) mit der Abstützung. Sie lassen sich bei entsprechender konstruktiver Anpassung auch auf die andere Variante übertragen.

Bei den in Figur 38 bis 43 dargstellten Ausbildungsmöglichkeiten ist das thermische Abschaltmittel (35) als Bimetallteil (82) in unterschiedlichen Gestaltungen ausgebildet. Dessen unterschiedliche Metallkomponenten haben ein unterschiedliches Wärmedehnverhalten und führen dementsprechend bei Erwärmung eine Bewegung aus, die zum Deaktivieren der Nachstelleinrichtung (7) benutzt werden kann.

In der Ausführung von Figur 38 ist das Bimetallteil (82) z.B. als Bimetallspirale (84) ausgebildet, die auf dem Gewindestößel (21) angeordnet und gehalten ist und die mit ihrem außen liegenden freien Ende unter das Nachstellelement (25) greift. Bei Wärme dehnt sich die Bimetallspirale (84) und hebt bei Überschreiten einer Temperaturschwelle das Nachstellelement (25) vom Stellteil (20) ab.

Im Beispiel von Figur 39 ist am vorderen Hebelarm (28) des Nachstellhebels (22) ein Bimetallteil (82) derart angeordnet, dass bei der besagten Wärmeentwicklung der Hebelarm (28) mit dem Nachstellelement (25) vom Stellteil (20) weggebogen und gelöst wird.

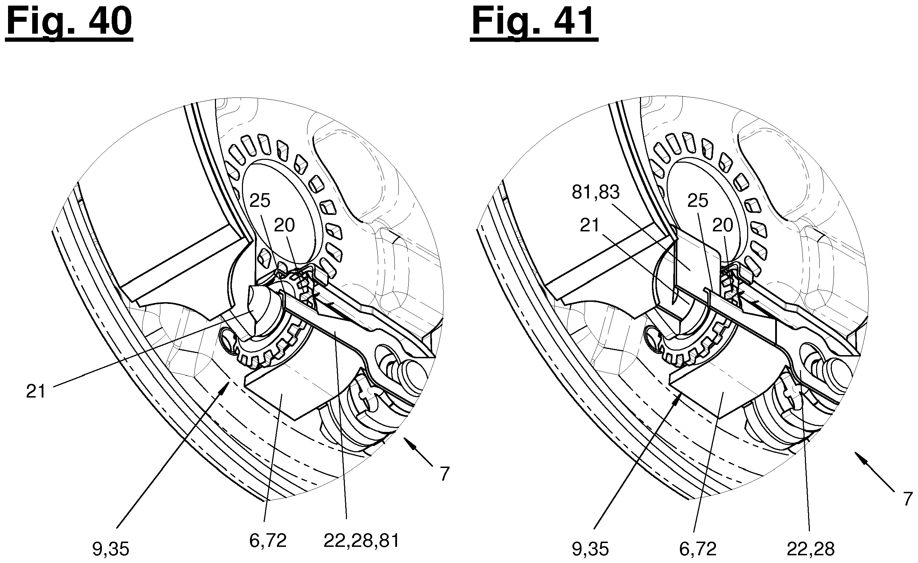

In der alternativen Ausführungsform von Figur 40 ist der Hebelarm (28) selbst als Bimetallteil (82) ausgebildet und hat die gleiche Funktion wie bei Figur 39.

Bei der Ausführung von Figur 41 ist das Bimetallteil (82) als gebogener, zweiarmiger Bimetallbügel (83) ausgebildet, der auf dem Steg (15) der in Rückwärtsfahrt ablaufenden Bremsbacke (13) angeordnet ist. Der im Querschnitt U-förmige Bimetallbügel (83) liegt mit einem Bügelarm auf dem Steg (15) auf, wobei der andere Bügelarm unter das Nachstellelement (25) greift und dieses bei ausreichender Wärme durch eine Spreizbewegung des Bimetallbügels (83) vom Stellteil (20) abhebt.

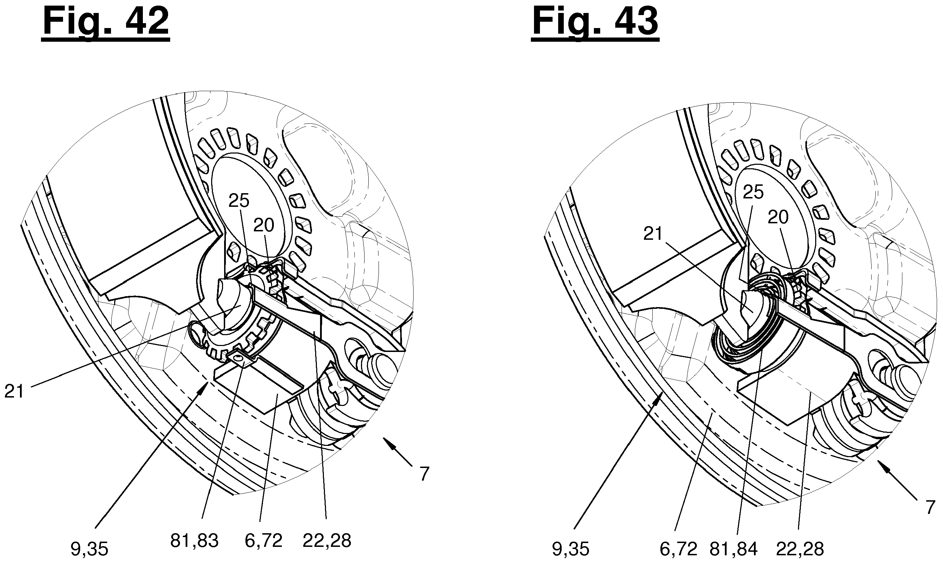

Bei der Ausführungsform von Figur 42 wirkt das Bimetallteil (82) auf das Stellteil (20) direkt ein. Es ist hier als gestreckter, einarmiger Bimetallbügel (83) ausgebildet, der am Gehäuse (19) der Rückfahrautomatik (6) befestigt ist. Der am freien Ende abgekröpfte Bimetallbügel (83) wird bei ausreichender Wärme zum Stellteil (20) hin bewegt und greift mit einem am freien Bügelende angeordneten Ansatz in die Verzahnung und blockiert die Drehbewegung des Stellteils (20). Das Nachstellorgan (22) ist in diesem Fall zwar mit dem Stellteil (20) in Eingriff, kann letzteres aber durch die Blockade nicht verstellen, insbesondere nicht drehen.

Auch bei der Ausführungsform von Figur 43 wirkt das Bimetallteil (82) auf das Stellteil (20). Es ist in diesem Fall als Bimetallspirale (84) auf dem Gewindestößel (21) ausgebildet, die bei Auftreten von ausreichender Wärme in die Verzahnung des Stellteils (20) greift und letzteres blockiert.

Abwandlungen der gezeigten und beschriebenen sieben Varianten der Radbremse (2) sind in verschiedener Weise möglich. Zum einen können die Einzelmerkmale der Ausführungsbeispiele, insbesondere die Merkmale der Nachstelleinrichtung (7), der Aktivierungseinrichtung (8) und der Thermoabschaltung (9), beliebig miteinander kombiniert und vertauscht werden. Eine Thermoabschaltung (9) kann entfallen. Auch das Übertragungselement (36) kann in anderer Weise als in den Ausführungsbeispielen ausgebildet sein. Es kann z.B. als Zugstange oder Schubstange mit entsprechender Kraft- und Bewegungsumlenkung am Antriebs- und Abtriebsmittel (44,47) ausgebildet sein. In weiterer Abwandlung kann das Übertragungselement statt an der Betätigungseinrichtung (3) an einer oder an beiden Bremsbacken (12,13) gekoppelt sein und deren Bewegungen beim Bremsen und bei Rückwärtsfahrt abgreifen. Es kann dabei z.B. als Lenkergetriebe ausgeführt sein. Ferner können auch die Betätigungseinrichtung (3) und die Rückfahrautomatik (6) konstruktiv in anderer Weise ausgebildet sein.

### BEZUGSZEICHENLISTE

- 1: Fahrzeugrad
- 2: Radbremse
- 3: Betätigungseinrichtung, Spreizeinrichtung
- 4: Spreizorgan, Spreizhebel
- 5: Gestell
- 6: Rückfahrautomatik
- 7: Nachstelleinrichtung
- 8: Aktivierungseinrichtung
- 9: Thermoabschaltung
- 10: Bremsschild
- 11: Bremsorgan, Bremstrommel
- 12: Bremsbacke, auflaufend
- 13: Bremsbacke, ablaufend
- 14: Belagträger
- 15: Steg
- 15': Steg von Backenträger
- 16: Ausweichorgan, Schwenkhebel
- 17: Schwenkachse
- 18: Stützglied
- 19: Gehäuse
- 20: Stellteil, Zahnrad
- 21: Gewindestößel
- 22: Nachstellorgan, Nachstellhebel
- 23: Zustellachse, Schwenkachse
- 24: Nachstellachse, Schwenkachse
- 25: Nachstellelement, Stellnase
- 26: Aktivierungsmittel, Stützmittel, Stützarm
- 27: Deaktivierungsmittel, Spannmittel, Feder
- 28: Hebelarm vorn
- 29: Hebelarm hinten
- 30: Ansatz
- 31: Stellarm
- 32: Schwenkhebel
- 33: Hebelteil
- 34: Hebelteil
- 36: thermisches Abschaltmittel, Bimetallbügel
- 36: Übertragungselement der Nachstelleinrichtung
- 37: Übertragungshebel, Schwenkhebel
- 38: Seilzug
- 39: Hebelarm vorn
- 40: Hebelarm hinten
- 41: Lager, Schwenklager
- 42: Schwenkachse
- 43: Raddrehachse, Trommelachse
- 44: Antriebsmittel, Mitnehmer
- 45: Übersetzung, Kulisse
- 46: Führung, Auge
- 47: Abtriebsmittel, Mitnehmer
- 48: Drehbügel
- 49: Seil
- 50: Mantel
- 51: Seilanschluss
- 52: Mantelanschluss
- 53: Mantelanschluss
- 54: Umlenkgetriebe
- 55: Seilumlenkung
- 56: Feder
- 57: Fahrzeug, Fahrzeuganhänger
- 58: Fahrgestell
- 59: Achse
- 60: Zugdeichsel
- 61: Anhängerkupplung
- 62: Auflaufbremseinrichtung
- 63: Feststellbremseinrichtung, Handbremseinrichtung
- 64: Drehrichtung Vorwärtsfahrt
- 65: Drehrichtung Rückwärtsfahrt
- 66: Schiebebacke
- 67: Backenträger
- 68: Führung
- 69: Führungselement, Langlochführung
- 70: Führungselement, Schrägführung
- 71: Aufnahmetasche
- 72: Abstützung Bremsbacken
- 73: Stützteil, Nocke
- 74: Getriebe, Lenkergetriebe
- 75: Getriebeteil, Schwenkhebel
- 76: Getriebeteil, Lenker
- 77: Verbindung, Gelenk
- 78: Verbindung, Gelenk
- 79: Lager
- 80: Treibteil, Anschlagzapfen
- 81: Mitnehmer, Armansatz
- 82: Bimetallteil
- 83: Bimetallbügel
- 84: Bimetallspirale

## Patentansprüche

1. Radbremse, insbesondere Trommelbremse, mit einer Betätigungseinrichtung (3) und mit Bremsbacken (12,13), die einerseits mit der Betätigungseinrichtung (3) und andererseits mit einer der Betätigungseinrichtung (3) gegenüber liegenden Abstützung (72) verbunden sind, wobei die Radbremse (1) eine Rückfahrautomatik (6) aufweist, welche die Bremswirkung bei Rückwärtsfahrt mindert oder aufhebt und eine im Bereich der Abstützung (72) angeordnete automatische Nachstelleinrichtung (7) zum Nachstellen der Bremswirkung aufweist, wobei die Nachstelleinrichtung (7) bei Rückwärtsfahrt deaktivierbar ist, **dadurch gekennzeichnet, dass** die Nachstelleinrichtung (7) ein mit der Betätigungseinrichtung (3) verbundenes Übertragungselement (36) aufweist.

2. Radbremse nach Anspruch 1, **dadurch**
**gekennzeichnet, dass** das Übertragungselement (36) direkt mit der Betätigungseinrichtung (3) verbunden ist und von dieser betätigt wird.

3. Radbremse nach Anspruch 1 oder 2, **dadurch**
**gekennzeichnet, dass** die Nachstelleinrichtung (7) eine Aktivierungseinrichtung (8) aufweist, welche die Nachstelleinrichtung (7) bei Vorwärtsfahrt aktiviert und bei Rückwärtsfahrt deaktiviert.

4. Radbremse nach Anspruch 1, 2 oder 3, **dadurch gekennzeichnet, dass** die Nachstelleinrichtung (7) eine Thermoabschaltung (9) aufweist, welche die Nachstelleinrichtung (7) bei übermäßiger Erwärmung deaktiviert.

5. Radbremse nach einem der vorhergehenden Ansprüche, **dadurch gekennzeichnet, dass** die Nachstelleinrichtung (7) an der Abstützung (72) angeordnet ist und beim Nachstellen deren Stützweite verändert.

6. Radbremse nach einem der vorhergehenden Ansprüche, **dadurch gekennzeichnet, dass** die Nachstelleinrichtung (7) ein Stellteil (20), insbesondere ein Zahnrad und ein Nachstellorgan (22), insbesondere einen Nachstellhebel, aufweist, wobei das Nachstellorgan (22) ein mit dem Stellteil (20) in einen Eingriff bringbares Nachstellelement (25), insbesondere eine Stellnase, aufweist und der Eingriff von Nachstellorgan (22) und Stellteil (20) aktivierbar und deaktivierbar ist.

7. Radbremse nach einem der vorhergehenden Ansprüche, **dadurch gekennzeichnet, dass** die Rückfahrautomatik (6) eine mehrteilige und bei Rückwärtsfahrt formveränderliche Bremsbacke (12) aufweist.

8. Radbremse nach einem der Ansprüche 1 bis 6, **dadurch gekennzeichnet, dass** die Rückfahrautomatik (6) an der Abstützung (72) angeordnet ist und ein Gehäuse (19) und ein relativ dazu bewegliches Ausweichorgan (16), insbesondere einen Schwenkhebel, sowie einen relativ zum Gehäuse (19) beweglichen, insbesondere verschieblichen, und mit dem Ausweichorgan (16) gekoppelten Gewindestößel (21) aufweist.

9. Radbremse nach nach Anspruch 6 oder nach einem der Ansprüche 7 bis 8 wenn vom Anspruch 6 abhängig **dadurch gekennzeichnet, dass** das Stellteil (20) der Nachstelleinrichtung (7) mit einem Stützteil (73) der Abstützung (72) oder mit einem Gewindestößel (21) der Rückfahrautomatik (6) gekoppelt ist, wobei das Nachstellorgan (22) einachsig oder mehrachsig beweglich ist und eine Nachstellachse (24) sowie ggf. eine Zustellachse (23) aufweist und an der Abstützung (72) oder an der Rückfahrautomatik (6), insbesondere an einem Gehäuse (19), drehbar gelagert ist.

10. Radbremse nach einem der vorhergehenden Ansprüche,
**dadurch gekennzeichnet, dass** das Übertragungselement (36) an einem Ende ein mit der Betätigungseinrichtung (3) verbundenes Antriebsmittel (44) und am anderen Ende ein mit der Nachstelleinrichtung (7) verbundenes Abtriebsmittel (47) aufweist, wobei das Übertragungselement (36) als Übertragungshebel (37), insbesondere als Schwenkhebel, oder als Seilzug (38) oder als Getriebe (74), insbesondere als Lenkergetriebe, ausgebildet ist.

11. Radbremse nach Anspruch 10, **dadurch gekennzeichnet, dass** ein Deaktivierungsmittel (27) bei Rückwärtsfahrt die Bewegungsweiterleitung in einem Übertragungselement (36), insbesondere in einem Getriebe (74), mindert oder unterbindet, wobei das Deaktivierungsmittel (27) bei Rückwärtsfahrt ein Getriebe (74), insbesondere ein Lenkergetriebe, kollabieren lässt.

12. Radbremse nach Anspruch 10 oder 11, **dadurch gekennzeichnet, dass** ein Teil (75) des Getriebes (74) an einer Bremsbacke, insbesondere an der bei Rückwärtsfahrt auflaufenden Bremsbacke (12), gelagert ist.

13. Radbremse nach Anspruch 4 oder nach einem der Ansprüche 5 bis 12 wenn vom Anspruch 4 abhängig **dadurch gekennzeichnet, dass** die Thermoabschaltung (9) ein an der Nachstelleinrichtung (7), insbesondere am Nachstellorgan (22) oder am Stellteil (20), angreifendes thermisches Abschaltmittel (35), insbesondere einen Bimetallbügel, aufweist.

14. Fahrzeug, insbesondere Fahrzeuganhänger, mit einer Radbremse (2), insbesondere Trommelbremse, die eine Betätigungseinrichtung (3) und Bremsbacken (12,13), aufweist, die einerseits mit der Betätigungseinrichtung (3) und andererseits mit einer der Betätigungseinrichtung (3) gegenüber liegenden Abstützung (72) verbunden sind, wobei die Radbremse (2) eine Rückfahrautomatik (6) aufweist, welche die Bremswirkung bei Rückwärtsfahrt mindert oder aufhebt und eine im Bereich der Abstützung (72) angeordnete automatische Nachstelleinrichtung (7) zum Nachstellen der Bremswirkung aufweist, wobei die Nachstelleinrichtung (7) bei Rückwärtsfahrt deaktivierbar ist, **dadurch gekennzeichnet, dass** die Radbremse (2) nach mindestens einem der Ansprüche 1 bis 13 ausgebildet ist.

15. Verfahren zum Betrieb einer Radbremse (2), insbesondere Trommelbremse, mit einer Betätigungseinrichtung (3) und mit Bremsbacken (12,13), die einerseits mit der Betätigungseinrichtung (3) und andererseits mit einer der Betätigungseinrichtung (3) gegenüber liegenden Abstützung (72) verbunden sind, wobei die Radbremse (1) eine Rückfahrautomatik (6) aufweist, welche die Bremswirkung bei Rückwärtsfahrt mindert oder aufhebt und eine im Bereich der Abstützung (72) angeordnete automatische Nachstelleinrichtung (7) zum Nachstellen der Bremswirkung aufweist, wobei die Nachstelleinrichtung (7) bei Rückwärtsfahrt deaktivierbar ist, **dadurch gekennzeichnet, dass** die Nachstelleinrichtung (7) von der Betätigungseinrichtung (3) mittels eines damit verbundenen Übertragungselements (36) betätigt wird.

## Claims

1. Wheel brake, in particular drum brake, with an actuating device (3) and with brake shoes (12, 13) which are connected at one side to the actuating device (3) and at the other side to a support (72) situated opposite the actuating device (3), the wheel brake (1) having an automatic reverse mechanism (6), which reduces or eliminates the braking action during reverse driving, and having an automatic readjustment device (7), which is arranged in the region of the support (72) and which serves for readjustment of the braking action, it being possible for the readjustment device (7) to be deactivated during reverse driving,
**characterized in that** the readjustment device (7) has a transmission element (36) connected to the actuating device (3).

2. Wheel brake according to Claim 1,
**characterized in that** the transmission element (36) is connected directly to, and is actuated by, the actuating device (3).

3. Wheel brake according to Claim 1 or 2,
**characterized in that** the readjustment device (7) has an activation device (8) which activates the readjustment device (7) during forward driving and deactivates said readjustment device during reverse driving.

4. Wheel brake according to Claim 1, 2 or 3,
**characterized in that** the readjustment device (7) has a thermal disengagement mechanism (9) which deactivates the readjustment device (7) in the event of excessive heating.

5. Wheel brake according to one of the preceding claims,
**characterized in that** the readjustment device (7) is arranged on the support (72) and changes its supporting width during readjustment.

6. Wheel brake according to one of the preceding claims,
**characterized in that** the readjustment device (7) has an adjustment part (20), in particular a gearwheel, and a readjustment element (22), in particular a readjustment lever, wherein the readjustment element (22) has a readjustment element (25), in particular an adjustment lug, which can be placed in engagement with the adjustment part (20) and the engagement of readjustment element (22) and adjustment part (20) can be activated and deactivated.

7. Wheel brake according to one of the preceding claims,
**characterized in that** the automatic reverse mechanism (6) has a multi-part brake shoe (12) that undergoes a change in shape during reverse driving.

8. Wheel brake according to one of Claims 1 to 6,
**characterized in that** the automatic reverse mechanism (6) is arranged on the support (72) and has a housing (19) and a deflection element (16), in particular a pivot lever, which is movable relative to said housing, and also has a threaded plunger (21) which is movable, in particular displaceable, relative to the housing (19) and which is coupled to the deflection element (16).

9. Wheel brake according to Claim 6 or according to either of Claims 7 and 8 when dependent on Claim 6,
**characterized in that** the adjustment part (20) of the readjustment device (7) is coupled to a support part (73) of the support (72) or is coupled to a threaded plunger (21) of the automatic reverse mechanism (6), wherein the readjustment element (22) is movable in one axis or in multiple axes, and has a readjustment axis (24) and, if appropriate, an advancement axis (23) and is rotatably mounted on the support (72) or on the automatic reverse mechanism (6), in particular on a housing (19).

10. Wheel brake according to one of the preceding claims,
**characterized in that** the transmission element (36) has, on one end, a drive input means (44) connected to the actuating device (3), and has, on the other end, a drive output means (47) connected to the readjustment device (7), wherein the transmission element (36) is in the form of a transmission lever (37), in particular a pivot lever, or is in the form of a cable pull (38) or in the form of a mechanism (74), in particular a link-type mechanism.

11. Wheel brake according to Claim 10,
**characterized in that** a deactivation means (27) reduces or eliminates the transfer of movement in a transmission element (36), in particular in a mechanism (74), during reverse driving, wherein the deactivation means (27) can collapse a mechanism (74), in particular a link-type mechanism, during reverse driving.

12. Wheel brake according to Claim 10 or 11,
**characterized in that** one part (75) of the mechanism (74) is mounted on a brake shoe, in particular on the brake shoe (12) that is the leading brake shoe during reverse driving.

13. Wheel brake according to Claim 4 or one of Claims 5 to 12 when dependent on Claim 4,
**characterized in that** the thermal disengagement mechanism (9) has a thermal disengagement means (35), in particular a bimetal stirrup, acting on the readjustment device (7), in particular on the readjustment element (22) or on the adjustment part (20).

14. Vehicle, in particular vehicle trailer, having a wheel brake (2), in particular drum brake, which has an actuating device (3) and brake shoes (12, 13) which are connected at one side to the actuating device (3) and at the other side to a support (72) situated opposite the actuating device (3), the wheel brake (1) having an automatic reverse mechanism (6), which reduces or eliminates the braking action during reverse driving, and having an automatic readjustment device (7), which is arranged in the region of the support (72) and which serves for readjustment of the braking action, it being possible for the readjustment device (7) to be deactivated during reverse driving,
**characterized in that** the wheel brake (2) is designed according to at least one of Claims 1 to 13.

15. Method for operating a wheel brake (2), in particular drum brake, with an actuating device (3) and with brake shoes (12, 13) which are connected at one side to the actuating device (3) and at the other side to a support (72) situated opposite the actuating device (3), the wheel brake (2) having an automatic reverse mechanism (6), which reduces or eliminates the braking action during reverse driving, and having an automatic readjustment device (7), which is arranged in the region of the support (72) and which serves for readjustment of the braking action, it being possible for the readjustment device (7) to be deactivated during reverse driving,
**characterized in that** the readjustment device (7) is actuated by the actuating device (3) via a transmission element (36) connected thereto.

## Revendications

1. Frein de roue, en particulier frein à tambour, avec un dispositif d'actionnement (3) et avec des mâchoires de frein (12, 13) qui sont raccordées d'une part au dispositif d'actionnement (3) et d'autre part à un support (72) situé en face du dispositif d'actionnement (3), le frein de roue (1) présentant un mécanisme automatique de marche arrière (6) qui réduit ou supprime l'action de freinage lors de la marche arrière et présentant un dispositif de réglage (7) automatique disposé dans la zone du support (72) pour le réglage de l'action de freinage, le dispositif de réglage (7) pouvant être désactivé lors de la marche arrière,
**caractérisé en ce que**
le dispositif de réglage (7) présente un élément de transmission (36) raccordé au dispositif d'actionnement (3).

2. Frein de roue selon la revendication 1, **caractérisé en ce que** l'élément de transmission (36) est raccordé directement au dispositif d'actionnement (3) et est actionné par celui-ci.

3. Frein de roue selon la revendication 1 ou 2, **caractérisé en ce que**
le dispositif de réglage (7) présente un dispositif d'activation (8) qui active le dispositif de réglage (7) lors de la marche avant et le désactive lors de la marche arrière.

4. Frein de roue selon la revendication 1, 2 ou 3
**caractérisé en ce que**
le dispositif de réglage (7) présente une coupure thermique (9) qui désactive le dispositif de réglage (7) en cas de chauffe excessive.

5. Frein de roue selon l'une des revendications précédentes,
**caractérisé en ce que**
le dispositif de réglage (7) est disposé sur le support (72) et modifie sa largeur d'appui lors du réglage.

6. Frein de roue selon l'une des revendications précédentes,
**caractérisé en ce que**
le dispositif de réglage (7) présente un organe de commande (20), en particulier une roue dentée et un organe de réglage (22), en particulier un levier de réglage, l'organe de réglage (22) présentant un élément de réglage (25) pouvant être mis en prise avec l'organe de commande (20), en particulier un bec de commande, et la mise en prise de l'organe de réglage (22) et de l'organe de commande (20) pouvant être activée et désactivée.

7. Frein de roue selon l'une des revendications précédentes,
**caractérisé en ce que**
le mécanisme automatique de marche arrière (6) présente une mâchoire de frein (12) en plusieurs parties et dont la forme varie lors de la marche arrière.

8. Frein de roue selon l'une des revendications 1 à 6, **caractérisé en ce que**
le mécanisme automatique de marche arrière (6) est disposé sur le support (72) et présente un carter (19) et un organe d'évitement (16) mobile par rapport au carter, en particulier un levier pivotant, ainsi qu'un poussoir fileté (21) mobile par rapport au carter (19), en particulier coulissant, et couplé à l'organe d'évitement (16).

9. Frein de roue selon la revendication 6 ou selon l'une des revendications 7 à 8 dans la mesure où elles dépendent de la revendication 6,
**caractérisé en ce que**
l'organe de commande (20) du dispositif de réglage (7) est couplé à une partie de support (73) du support (72) ou à un poussoir fileté (21) du mécanisme automatique de marche arrière (6), l'organe de réglage (22) étant mobile sur un axe ou sur plusieurs axes et présentant un axe de réglage (24) ainsi qu'éventuellement un axe d'approche (23) et étant supporté en rotation sur le support (72) ou sur le mécanisme automatique de marche arrière (6), en particulier sur un carter (19).

10. Frein de roue selon l'une des revendications précédentes,
**caractérisé en ce que**
l'élément de transmission (36) présente à une extrémité un moyen d'entraînement (44) raccordé au dispositif d'actionnement (3) et, à l'autre extrémité, un moyen de sortie (47) raccordé au dispositif de réglage (7), l'élément de transmission (36) étant constitué en tant que levier de transmission (57), en particulier en tant que levier pivotant, ou en tant que commande par câble (38) ou en tant qu'engrenage (74), en particulier en tant que mécanisme à bielle.

11. Frein de roue selon la revendication 10,
**caractérisé en ce que**, lors de la marche arrière, un moyen de désactivation (27) réduit ou empêche la transmission du mouvement dans un élément de transmission (36), en particulier dans un engrenage (74), le moyen de désactivation (27) faisant se rétracter un engrenage (74), en particulier un mécanisme à bielle, lors de la marche arrière.

12. Frein de roue selon la revendication 10 ou 11,
**caractérisé en ce qu'**une partie (75) de l'engrenage (74) est supportée sur une mâchoire de frein, en particulier sur la mâchoire de frein (12) lors de son engagement lors de la marche arrière.

13. Frein de roue selon la revendication 4 ou selon l'une des revendications 5 à 12 dans la mesure où elles dépendent de la revendication 4,
**caractérisé en ce que**
la coupure thermique (9) présente un moyen de coupure (35) thermique, en particulier un étrier bimétallique, agissant sur le dispositif de réglage (7), en particulier sur l'organe de réglage (22) ou sur l'organe de commande (20).

14. Véhicule, en particulier remorque de véhicule, avec un frein de roue (2), en particulier un frein à tambour, qui présente un dispositif d'actionnement (3) et des mâchoires de frein (12, 13) qui sont raccordées d'une part au dispositif d'actionnement (3) et d'autre part à un support (72) situé en face du dispositif d'actionnement (3), le frein de roue (2) présentant un mécanisme automatique de marche arrière (6) qui réduit ou supprime l'action de freinage lors de la marche arrière, et présentant un dispositif de réglage (7) automatique disposé dans la zone du support (72) pour le réglage de l'action de freinage, le dispositif de réglage (7) pouvant être désactivé lors de la marche arrière,
**caractérisé en ce que**
le frein de roue (2) est constitué selon au moins l'une des revendications 1 à 13.

15. Procédé de fonctionnement d'un frein de roue (2), en particulier d'un frein à tambour, avec un dispositif d'actionnement (3) et avec des mâchoires de frein (12, 13) qui sont raccordées d'une part au dispositif d'actionnement (3) et d'autre part à un support (72) situé en face du dispositif d'actionnement (3), le frein de roue (2) présentant un mécanisme automatique de marche arrière (6) qui réduit ou supprime l'action de freinage lors de la marche arrière, et présentant un dispositif de réglage (7) automatique disposé dans la zone du support (72) pour le réglage de l'action de freinage, le dispositif de réglage (7) pouvant être désactivé lors de la marche arrière,
**caractérisé en ce que**
le dispositif de réglage (7) est actionné par le dispositif d'actionnement (3) au moyen d'un élément de transmission (36) qui lui est raccordé.
